# EUROPÄISCHE PATENTSCHRIFT

(11) **EP 3 580 007 B1**
(45) Veröffentlichungstag und Bekanntmachung des Hinweises auf die Patenterteilung: **29.12.2021**
(21) Anmeldenummer: 18703009.3
(22) Anmeldetag: 02.02.2018
(51) Int. Cl.: B23K 26/00, B41C 1/05, G05B 19/4099, B23K 26/359, B23K 26/082

(54) **VERFAHREN UND STEUERVORRICHTUNG ZUR BEARBEITUNG EINER WERKSTÜCKOBERFLÄCHE MITTELS EINES LASERS**
METHOD AND CONTROL DEVICE FOR MACHINING A WORKPIECE SURFACE BY MEANS OF A LASER
PROCÉDÉ ET DISPOSITIF DE CONTRÔLE DE L'USINAGE D'UNE SURFACE DE PIÈCE AU MOYEN D'UN LASER

(30) Priorität: 13.02.2017 DE 102017202269
(43) Veröffentlichungstag der Anmeldung: 18.12.2019
(73) Patentinhaber: Sauer GmbH, 55758 Stipshausen (DE)
(72) Erfinder: HILDEBRAND, Peter, 87459 Pfronten (DE); REINICKE, Gottfried, 87435 Kempten (DE)
(74) Vertreter: MERH-IP Matias Erny Reichl Hoffmann Patentanwälte PartG mbB
(86) Internationale Anmeldenummer: PCT/EP2018/052660
(87) Internationale Veröffentlichungsnummer: WO 2018/146018

(56) Entgegenhaltungen:
- WO-A1-2016/189344
- DE-A1-102014 210 611
- US-A1- 2008 302 771
- US-A1- 2016 128 874

## Beschreibung

Die vorliegende Erfindung betrifft ein Verfahren zum Erzeugen von Spursegmentdaten zur Verwendung bei dem Erzeugen von Steuerdaten für ein Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine, ein Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine, und eine Steuervorrichtung zum Einsatz an einer numerisch gesteuerten Werkzeugmaschine, die eine Laservorrichtung zur Bearbeitung zumindest einer Werkstückoberfläche zum Aufbringen eines Texturmusters auf zumindest einem Abschnitt der Werkstückoberfläche mittels eines Lasers der Laservorrichtung aufweisen, siehe Ansprüche 1, 10 und 11 (Basis der Erfindung : US 2008/302771 A1).

### HINTERGRUND DER ERFINDUNG

Das Bearbeiten von Materialien im Mikrometerbereich umfasst die verschiedensten Aufgaben wie zum Beispiel Bohren, Gravieren, Strukturieren oder Schneiden. Dabei werden oft extreme Genauigkeits- und Geschwindigkeitsanforderungen an die Bearbeitungsprozesse gestellt. Laser-Scan-Prozesse (einschließlich Laserbearbeitung, z.B. Lasertexturieren) sind in diesem Bereich anderen Bearbeitungsverfahren überlegen. Sie weisen im Vergleich zu klassischen Bearbeitungsprozessen wie Fräsen und Schleifen eine deutlich höhere Dynamik und Präzision auf. Auch das Erzeugen von komplizierten Mustern und Strukturen (z.B. Texturen) in einem Werkstück kann mit einem derartigen Laser-Scan-System in deutlich besserer Qualität und höherer Geschwindigkeit erfolgen. Die Bandbreite bearbeitbarer Materialien reicht dabei von Kunststoffen über sämtliche Arten von Metallen bis hin zu Glas und Keramik.

Eine verwendete Ausgabemethode, auf Basis derer filigrane Strukturen und Muster (z.B. ein flächiges Muster bzw. eine Textur) mittels einer Laservorrichtung bzw. eines Laser-Scan-Systems an einem Werkstück erzeugt werden können, ist die sogenannte Sky-Writing-Methode. Die Laserbearbeitung wird hierbei auf Grundlage von Steuerdaten gesteuert, die den Laser entlang einer Spur auf der Werkstückoberfläche führen auf Basis einer Vielzahl von einzelnen Segmentsequenzen der Steuerdaten.

Dabei erhält jede Segmentsequenz der Steuerdaten ein Segment bzw. Spursegment, bei dem der Laser eingeschaltet ist und das der Laser im eingeschalteten Zustand bei einer im Wesentlichen konstanten Bearbeitungsgeschwindigkeit überfährt (im Folgenden Bearbeitungssegment bzw. Laserspursegment genannt), ein Anfahrsegment (Anfangsüberfahrtsegment), bei dem der Laser vor dem Bearbeitungssegment bzw. Laserspursegment beschleunigt wird, und ein Bremssegment (Endüberfahrtsegment), bei dem der Laser nach dem Bearbeitungssegment wieder abgebremst wird, wobei während des Beschleunigens und des Abbremsens der Laser ausgeschaltet ist.

Diese Abfolge der verschiedenen Segmente wird dazu genutzt, um den Laser ortsgenau und mit einer konstanten Sollgeschwindigkeit während der eigentlichen Bearbeitung über das Werkstück zu führen.

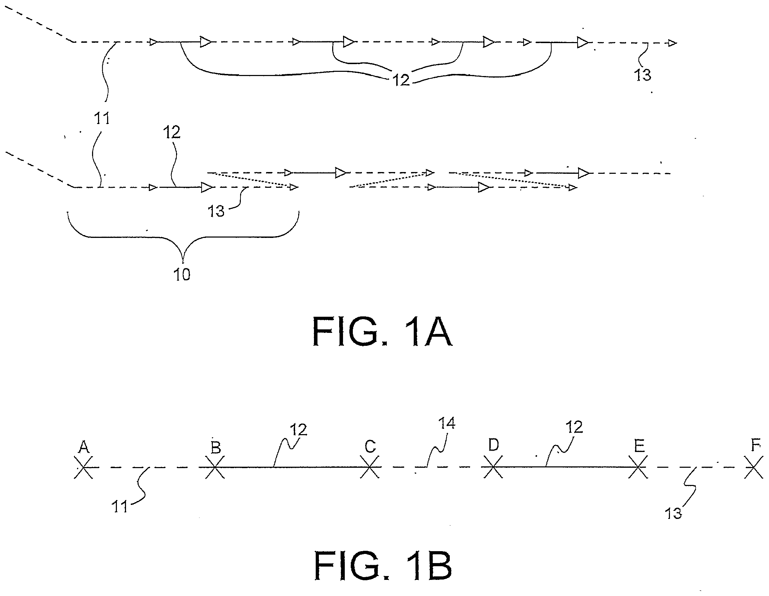

Hierdurch kann es jedoch zu dem Nachteil kommen, dass sich bei sehr kurzen Bearbeitungssegmenten, die zudem nah beieinander liegen, das Bremssegment mit einem anderen Anfahrsegment überlagert. Als Folge dessen kann es passieren, dass der Laser nach dem Durchfahren des Bremssegments wieder zurück bewegt wird, um dann erneut mit dem Beschleunigen des Lasers (Anfahrsegment) beginnen zu können. Der dabei entstehende "Pilgerschritt" (siehe dazu Fig. 1, obere Darstellung) des Lasers führt zu einem massiven Anstieg der Bearbeitungszeit.

Ausgehend von der vorstehenden Erläuterungen und der Sky-Writing Methode ist es eine Aufgabe der vorliegenden Erfindung, ein Verfahren zum Bearbeiten eines Werkstücks zum Aufbringen eines Musters mittels eines Lasers bereitzustellen, mit dem die Bearbeitungszeit deutlich reduziert und gleichzeitig die Güte des erzeugten Musters beibehalten werden kann.

### ZUSAMMENFASSUNG DER EFINDUNG

Gemäß der vorliegenden Erfindung wird zur Lösung der vorstehenden Aufgabe ein Verfahren nach Anspruch 1 sowie ein nebengeordnetes Verfahren gemäß Anspruch 10 vorgeschlagen. Nebengeordnet werden eine Steuervorrichtung zum Einsatz an einer numerisch gesteuerten Werkzeugmaschine gemäß Anspruch 11 und eine Werkzeugmaschine gemäß Anspruch 12 vorgeschlagen. Die abhängigen Ansprüche beziehen sich auf vorteilhafte Ausführungsbeispiele.

Gemäß einem Aspekt der vorliegenden Erfindung wird ein Verfahren zur Bearbeitung zumindest einer Werkstückoberfläche zum Aufbringen eines Texturmusters auf zumindest einem Abschnitt der Werkstückoberfläche mittels eines Lasers vorgeschlagen, insbesondere an einer numerisch gesteuerten Werkzeugmaschine.

Das Verfahren umfasst das Bereitstellen von Bilddaten, die ein Bild des auf dem zumindest einen Abschnitt der Werkstückoberfläche aufzubringenden Texturmusters angeben, und Modelldaten, die eine dreidimensionale Geometrie einer Oberflächenform entsprechend des zumindest einen Abschnitts der Werkstückoberfläche angeben; und/oder das Erzeugen von Spursegmentdaten auf Grundlage der Bilddaten und der Modelldaten, wobei die Spursegmentdaten für eine Mehrzahl von an dem Abschnitt der Werkstückoberfläche verlaufenden Spurlinien in Abhängigkeit des Texturmusters jeweils eine Mehrzahl von entlang der jeweiligen Spurlinie hintereinander verlaufenden Laserspursegmenten angeben.

Das Verfahren umfasst weiterhin das Erzeugen von Steuerdaten auf Grundlage der erzeugten Spursegmentdaten, wobei die Steuerdaten für jede Spurlinie eine oder mehrere Segmentsequenzen angeben und jede Segmentsequenz Spursegmente aufweist, entlang derer der Laser zum Aufbringen des Texturmusters auf dem zumindest einen Abschnitt der Werkstückoberfläche geführt wird, und wobei die Spursegmente einer Segmentsequenz ein oder mehrere Laserspursegmente umfassen, die der Laser in eingeschaltetem Zustand mit einer im Wesentlichen konstanten Bearbeitungssollgeschwindigkeit überfährt; und/oder das Ausgeben der erzeugten Steuerdaten an eine Laservorrichtung, die den Laser zum Aufbringen des Texturmusters auf dem zumindest einen Abschnitt der Werkstückoberfläche auf Grundlage der Steuerdaten steuert.

Die Spursegmentdaten können bevorzugt insbesondere vorteilhaft auf Grundlage der Bilddaten und Modelldaten mit der Maßgabe erstellt werden, dass vorzugsweise für jede Spurlinie die Anzahl benachbarter Laserspursegmente, die im Wesentlichen kollinear relativ zueinander angeordnet sind, bevorzugt vergrößert wird, und insbesondere bevorzugt maximiert wird.

Die Steuerdaten werden dann vorteilhaft derart erzeugt, dass jede zumindest zwei Laserspursegmente aufweisende Segmentsequenz zwischen zwei benachbarten Laserspursegmenten, die bevorzugt im Wesentlichen kollinear zueinander ausgerichtet sind, jeweils ein Überfahrtsegment aufweist, das der Laser in ausgeschaltetem Zustand mit der im Wesentlichen konstanten Bearbeitungssollgeschwindigkeit überfährt.

Der vorliegenden Erfindung liegt die Idee zugrunde, dass die Spursegmentdaten derart bereitgestellt werden, dass im Rahmen von sehr kleinen Winkelabweichungstoleranzen (bevorzugt kleiner 3°, insbesondere bevorzugt kleiner 1,5°) die an einer Spurlinie hintereinander liegenden Laserspursegmente möglichst kollinear angeordnet werden, derart, dass möglichst viele (bis zu mehr als 80%) der Laserspursegmente einer Spurlinie in einer Segmentsequenz integriert werden, derart, dass zwischen benachbarten Laserspursegmenten möglichst keine Beschleunigungs- oder Bremssegmente eingefügt werden müssen, um eine neue Segmentsequenz zu starten, sondern stattdessen vorteilhaft die zwischen den Laserspursegmenten liegenden Bereiche im Rahmen der gleichen Segmentsequenz fliegend überfahren werden können, ohne die Bearbeitungssollgeschwindigkeit abbremsen zu müssen.

Dies hat den großen Vorteil, dass die Gesamtbearbeitungszeit signifikant reduziert werden kann, da effektivere und mehr Laserspurelemente abdeckende Segmentsequenzen mittels des Lasers ohne Unterbrechung und Neuausrichtung durchfahren werden können, und andererseits höhere Oberflächengüten erreicht werden können, da einheitlichere Bearbeitungsgeschwindigkeiten gefahren werden können.

Ein Aspekt der Erfindung, der es vorteilhaft ermöglicht, die Steuerdaten zu erzeugen, derart, dass mehr Laserspursegmente in einer gemeinsamen, in einem Stück zu durchfahrenden Segmentsequenz integrierbar sind, ist, dass bei der Erzeugung der Laserspursegmente angesetzt wird, noch bevor die eigentlichen Segmentsequenzen für das Erzeugen der Steuerdaten erstellt bzw. ausgewählt werden. Dies wird vorteilhaft ermöglicht, indem bereits bei dem Zusammenstellen der Laserspursegmente auf Basis der Bild- und Modelldaten für jede Spurlinie überprüft werden kann, inwieweit bereits möglichst kollineare Laserspursegmente hintereinander angeordnet sein können bzw. sind.

Die Erfinder haben zudem herausgefunden, dass numerische Aufbereitung der Daten und Koordinaten, z.B. mittels Glättung, Näherung, ungewöhnlichen Genauigkeitserhöhungen, bereits bei dem Ermitteln der Laserspursegmente, als auch durch nachträgliches Glätten und Modifizieren der Koordinaten der ermittelten Laserspursegmente vor Erzeugen der Steuerdaten mit den Segmentsequenzen, einen unerwartet großen Effekt haben, dass optimierte Steuerdaten erzeugt werden können, die Segmentsequenzen mit mehreren zusammen überfahrbaren Laserspursegmenten umfassen, so dass die Bearbeitungszeit signifikant reduziert werden kann. Dies betrifft insbesondere Oberflächenformen mit Abweichungen von der reinen ebenen Oberfläche, z.B. bei dem Aufbringen von Texturmustern auf Werkstücken mit Freiformoberflächen.

Gemäß einer besonders zweckmäßigen Ausführung kann der Schritt des Erzeugens von Spursegmentdaten für jede Spurlinie weiterhin den Schritt Erhöhen der Kollinearität benachbarter Laserspursegmente der entsprechenden Spurlinie umfassen, insbesondere bevorzugt durch Modifizieren der dreidimensionalen Koordinaten der Laserspursegmente z.B. in im Wesentlichen radialer Richtung relativ zu der Richtung der Laserspursegmente bzw. der jeweiligen Spurlinie. Mit "radialer Richtung" ist hierbei eine Richtung gemeint, die sich an dem jeweiligen Koordinatenpunkt im Wesentlichen radial (d.h. im Wesentlichen senkrecht) von der Spurlinie, dem entsprechenden Laserspursegment oder einer durch die Laserspursegmente interpolierend gelegte Gerade weg-oder zu dieser hin erstreckt. Im einfachsten Falle kann dies auf Basis einer Projektion auf eine im Wesentlichen gerade Linie (z.B. eine durch mehrere oder alle Laserspursegmente einer Spurlinie interpolierend gelegte Gerade) erfolgen.

Dies hat den Vorteil, dass selbst nach dem Erstellen/Ermitteln der Laserspursegmente auf Basis der Bild- und Modelldaten zudem die ermittelten Koordinaten der Laserspursegmente noch modifiziert werden können, bevorzugt in lateraler Richtung (d.h. quer bzw. senkrecht zur Richtung der Laserspursegmente), um die Kollinearität der Laserspursegmente einer Spurlinie noch weiter zu erhöhen und noch weiter optimierte Segmentsequenzen zu ermöglichen.

Vorzugsweise wird das Modifizieren der dreidimensionalen Koordinaten der Laserspursegmente in im Wesentlichen radialer Richtung mittels Verschieben von Koordinaten von einem oder mehreren Punkten der Laserspursegmente in im Wesentlichen radialer Richtung relativ zu der Richtung der Laserspursegmente bzw. der jeweiligen Spurlinie durchgeführt.

Dies hat den Vorteil, dass selbst nach dem Erstellen/Ermitteln der Laserspursegmente auf Basis der Bild- und Modelldaten zudem die ermittelten Koordinaten der Laserspursegmente noch modifiziert werden können, besonders effizient in lateraler Richtung (d.h. quer bzw. senkrecht zur Richtung der Laserspursegmente), um die Kollinearität der Laserspursegmente einer Spurlinie noch weiter zu erhöhen und noch weiter optimierte Segmentsequenzen zu ermöglichen.

Vorzugsweise wird im Schritt Erhöhen der Kollinearität benachbarter Laserspursegmente einer Spurlinie für dreidimensionale Koordinaten der Laserspursegmente eine im Wesentlichen radiale Koordinatenverschiebung bis zu einem maximalen Koordinatenverschiebungsgrenzwert durchgeführt.

Dies hat den Vorteil, dass die Koordinatenverschiebungen nur im Rahmen eines tolerierbaren Grenzwerts durchgeführt werden können, um die erforderliche bzw. gewünschte Bildqualität des aufzubringenden Texturmusters zu erhalten.

Vorzugsweise ist eine erste Koordinatenachse im dreidimensionalen Koordinatensystem der Modelldaten im Wesentlichen parallel zur Lasereinfallrichtung bei der Bearbeitung ausgerichtet und eine Ebene der beiden anderen Koordinatenachsen im dreidimensionalen Koordinatensystem der Modelldaten ist vorzugsweise im Wesentlichen senkrecht zur Lasereinfallrichtung bei der Bearbeitung ausgerichtet.

Vorzugsweise ist der Koordinatenverschiebungsgrenzwert für eine Koordinatenverschiebung in Richtung der ersten Koordinatenachse größer, als der Koordinatenverschiebungsgrenzwert für eine Koordinatenverschiebung in einer in der Ebene der beiden anderen Koordinatenachsen liegenden Richtung.

Dies hat den Vorteil, dass die Koordinatenmodifizierung in Richtung in Laserrichtung, die die Bildqualität des Texturmusters nicht signifikant beeinflusst, zur Erhöhung der Kollinearität der Laserspursegmente höher ausfallen kann, als in einer Richtung, die senkrecht zur Lasereinfallrichtung liegt.

Vorzugsweise ist eine Beabstandung von nebeneinander liegenden Spurlinien im Wesentlichen kleiner oder gleich einer Breite des Lasers auf der Werkstückoberfläche bei deren Bearbeitung, und insbesondere größer oder gleich der halben Breite des Lasers auf der Werkstückoberfläche bei deren Bearbeitung.

Vorzugsweise ist der Koordinatenverschiebungsgrenzwert, insbesondere für eine Koordinatenverschiebung in einer in der Ebene der beiden anderen Koordinatenachsen liegenden Richtung (im Wesentlichen senkrecht zur Lasereinfallrichtung), kleiner oder gleich 5% der Breite des Lasers auf der Werkstückoberfläche bei deren Bearbeitung, insbesondere kleiner oder gleich 1% der Breite des Lasers auf der Werkstückoberfläche bei deren Bearbeitung.

Vorzugsweise ist der Koordinatenverschiebungsgrenzwert für eine Koordinatenverschiebung in Richtung der ersten Koordinatenachse größer oder gleich 10%, insbesondere größer oder gleich 35%, der Breite des Lasers auf der Werkstückoberfläche bei deren Bearbeitung; und/oder der Koordinaten-verschiebungsgrenzwert für eine Koordinatenverschiebung in Richtung der ersten Koordinatenachse größer oder gleich 50% der Toleranzbreite der Fokuslage des Lasers, insbesondere größer oder gleich 75% der Toleranzbreite der Fokuslage des Lasers.

Vorzugsweise wird das Modifizieren der dreidimensionalen Koordinaten der Laserspursegmente in im Wesentlichen radialer Richtung in einer im Wesentlichen senkrecht zur Lasereinfallrichtung liegenden Ebene durchgeführt und/oder das Modifizieren der dreidimensionalen Koordinaten der Laserspursegmente wird vorzugsweise in im Wesentlichen radialer Richtung im Wesentlichen parallel zur Lasereinfallrichtung durchgeführt.

Gemäß einer besonders zweckmäßigen Ausführung geben die Modelldaten weiterhin eine Koordinatenabbildung von zweidimensionalen Koordinaten eines ersten Koordinatensystems der Bilddaten auf dreidimensionale Koordinaten eines zweiten Koordinatensystems auf der Oberflächenform der Modelldaten an. Alternativ oder zusätzlich geben die Modelldaten weiterhin eine Koordinatenabbildung von zweidimensionalen Koordinaten des ersten Koordinatensystems der Bilddaten auf zweidimensionale Koordinaten eines dritten Koordinatensystems von auf der Oberflächenform verlaufenden Oberflächenkoordinaten (z.B. UV-Koordinaten) an.

Die Modelldaten können auf der Oberfläche durch zusätzliche zweidimensionale Koordinaten angegeben sein, die die Abbildung vom zwei- in den dreidimensionalen Koordinatenraum beschreiben. Dies können z.B. UV-Koordinaten sein.

Vorzugsweise umfasst das Erzeugen von Spursegmentdaten auf Grundlage der Bilddaten und der Modelldaten die Schritte: Schraffieren eines dem zumindest einem Abschnitt der Werkstückoberfläche entsprechenden Abschnitt mit einer Mehrzahl von parallel verlaufenden Spurlinien, Projizieren der Spurlinien oder von Segmenten der Spurlinien auf die dreidimensionale Geometrie der Oberflächenform entsprechend des zumindest einen Abschnitts der Werkstückoberfläche, und/oder Ermitteln von Spurliniensegmenten, an denen die Spurlinien das Texturmuster in dem entsprechenden Abschnitt des Bilds des Texturmusters überlagern

Dies hat den Vorteil, dass auf einfache Art und Weise effizient gerade verlaufende Spurlinien aus dem zweidimensionalen Raum der Bilddaten in den Raum der Modelldaten mit dreidimensionalen Koordinaten projiziert werden können, auf die Oberflächenform des Werkstücks gemäß den Modelldaten, um genau und zuverlässig Laserspursegmente am dreidimensionalen Werkstück auch an nicht ebenen Stellen bzw. Freiformflächen ermitteln zu können.

Vorzugsweise umfasst das Erzeugen von Spursegmentdaten auf Grundlage der Bilddaten und der Modelldaten hierbei beispielsweise die Schritte: Schraffieren eines dem zumindest einem Abschnitt der Werkstückoberfläche entsprechenden Abschnitt des Bilds des Texturmusters mit einer Mehrzahl von parallel verlaufenden Spurlinien; Ermitteln von Spurliniensegmenten, an denen die Spurlinien das Texturmuster in dem entsprechenden Abschnitt des Bilds des Texturmusters überlagern; und/oder Projizieren der ermittelten Spurliniensegmente auf die dreidimensionale Geometrie der Oberflächenform entsprechend des zumindest einen Abschnitts der Werkstückoberfläche durch Abbilden von zweidimensionalen Koordinaten jedes Spurliniensegments aus dem ersten Koordinatensystem der Bilddaten auf dreidimensionale Koordinaten auf der Oberflächenform der Modelldaten auf Grundlage der Koordinatenabbildung der Modelldaten, derart, dass die für jedes Spurliniensegment im ersten Koordinatensystem dreidimensionale Koordinaten eines entsprechenden Laserspursegments im zweiten Koordinatensystem ermittelt werden.

In einigen Ausführungsbeispielen kann beispielhaft angenommen werden, dass die parallel verlaufenden geradlinigen Spurlinien im 2D-Koordinatenraum der Bilddaten des Pixelbilds des Texturmusters angeordnet werden und bereits bei oder mit Ermitteln der Überlappungen mit dem Texturmuster aus dem 2D-Koordinatenraum der Bilddaten auf die Oberflächenform der 3D-Modelldaten projiziert werden, bzw. bereits im 2D-Raum der Bilddaten ermittelte Spurliniensegmente entsprechend des Texturmusters projiziert werden.

Hierbei kann beispielsweise die Mehrzahl von parallel verlaufenden Spurlinien im ersten Koordinatensystem der Bilddaten angeordnet sein und der Schritt des Ermittelns von Spurliniensegmenten, an denen die Spurlinien das Texturmuster in dem entsprechenden Abschnitt des Bilds des Texturmusters überlagern, kann im ersten Koordinatensystem der Bilddaten durchgeführt werden.

Bevorzugt können dann im Schritt Projizieren der Spurlinien oder von Segmenten der Spurlinien die ermittelten Spurliniensegmente auf die dreidimensionale Geometrie der Oberflächenform entsprechend des zumindest einen Abschnitts der Werkstückoberfläche projiziert werden, insbesondere z.B. durch Abbilden von zweidimensionalen Koordinaten jedes ermittelten Spurliniensegments aus dem ersten Koordinatensystem der Bilddaten auf dreidimensionale Koordinaten auf der Oberflächenform der Modelldaten auf Grundlage der Koordinatenabbildung der Modelldaten, bevorzugt derart, dass die für jedes Spurliniensegment im ersten Koordinatensystem dreidimensionale Koordinaten eines entsprechenden Laserspursegments im zweiten Koordinatensystem ermittelt werden.

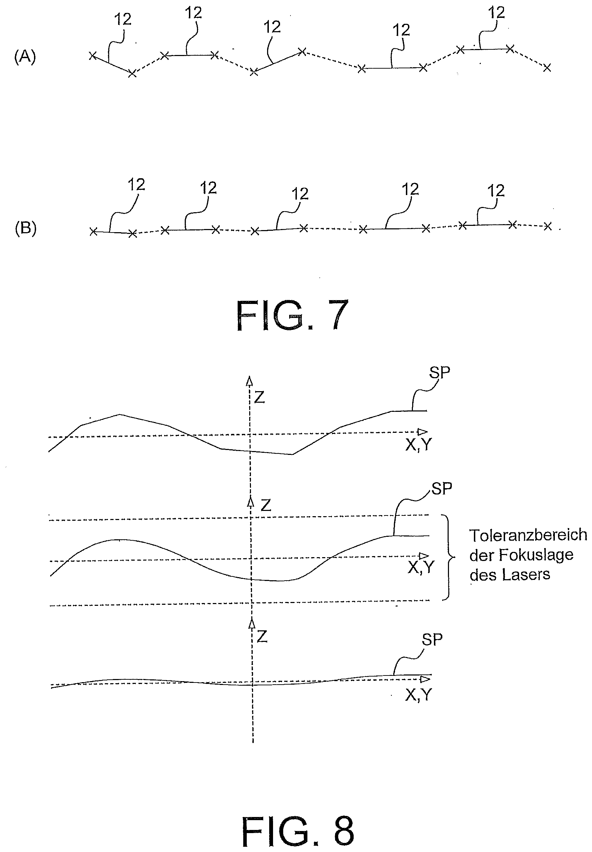

Es ist in anderen zweckmäßigen Ausführungsbeispielen auch möglich, die parallel verlaufenden, geradlinigen Spurlinien in dem 3D-Koordinatenraum der Bilddaten in der vorbestimmten Ebene anzuordnen, die beispielsweise diejenige Ebene sein kann, die im Wesentlichen senkrecht zur Lasereinfallrichtung ausgerichtet ist (z.B. die X-Y-Ebene in Fig. 8). Dann können die gesamten Spurlinien in einer (z.B. zu der Ebene senkrecht stehenden) Richtung auf die Oberflächenform der 3D-Modelldaten projiziert werden. Ferner können dann für jede projizierte Spurlinie auf der Oberflächenform der 3D-Modelldaten zweidimensionale Oberflächenkoordinaten ausgelesen werden (z.B. UV-Koordinaten), für die dann Pixelwerte oder interpolierte Pixelwerte aus den Bilddaten bzw. dem Pixelbild ausgelesen werden können. Auf Basis der ausgelesenen Pixelwerte oder interpolierte Pixelwerte können dann auf der projizierten Spurlinie die entsprechenden Laserspursegmente bzw. Laserspursegmentkoordinaten ausgelesen werden.

Hierbei kann die Mehrzahl von parallel verlaufenden Spurlinien im zweiten Koordinatensystem der Modelldaten in einer Spurlinienebene angeordnet sein, die insbesondere im Wesentlichen senkrecht zur Lasereinfallsrichtung ausgerichtet ist.

Im Schritt Projizieren der Spurlinien oder von Segmenten der Spurlinien können dann die Spurlinien im zweiten Koordinatensystem der Modelldaten aus der Spurlinienebene auf die dreidimensionale Geometrie der Oberflächenform entsprechend des zumindest einen Abschnitts der Werkstückoberfläche projiziert werden, insbesondere im Wesentlichen in Projektionsrichtung senkrecht zu der Spurlinienebene.

Im Schritt Ermitteln von Spurliniensegmenten, an denen die Spurlinien das Texturmuster in dem entsprechenden Abschnitt des Bilds des Texturmusters überlagern, können dann mittels der Koordinatenabbildung für Koordinaten der projizierten Spurlinie Bildwerte, insbesondere Pixelwerte, der das Texturmuster angebenden Bilddaten an entsprechenden Koordinaten im Koordinatenraum der Bilddaten ermittelt werden, und bevorzugt können die Spurliniensegmente auf Basis der ermittelten Bildwerte (bzw. Pixelwerte, bevorzugt nach Subpixel-Interpolation) im Koordinatenraum der Modelldaten ermittelt werden.

Vorzugsweise geben die Bilddaten ein Pixelbild (Rastergrafik) des Texturmusters an, mit einer Pixelbreite, die größer oder gleich 10% der Breite des Lasers auf der Werkstückoberfläche bei deren Bearbeitung ist, insbesondere größer oder gleich 25% der Breite des Lasers auf der Werkstückoberfläche bei deren Bearbeitung ist.

Dies hat den Vorteil, dass die Datenmenge (z.B. Dateigröße) für die Bilddaten in Grenzen gehalten werden kann und nicht für große Oberflächen zu hoch aufgelöste Datenmengen anfallen.

Vorzugsweise wird bei dem Ermitteln von Spurliniensegmenten, an denen die Spurlinien das Texturmuster in dem entsprechenden Abschnitt des Pixelbilds des Texturmusters überlagern, oder bei dem Ermitteln von Bild- bzw. Pixelwerten eine Subpixel-Interpolation durchgeführt.

Dies hat den Vorteil, dass trotz effizienter Datenmenge (z.B. kleinerer Dateigröße) für die Bilddaten bei der Projektion der Spurlinien in den Raum der Modelldaten Pixelrundungsfehler in lateraler Richtung vermieden werden können.

Es sei hierbei darauf hingewiesen, dass es eine derartige Subpixel-Interpolation zur Ermittelung der Koordinaten der Spurlinien in dem Pixelbild äußerst unerwartet Vorteile bietet. In der Regel sind Pixelgrößen etwa gleich oder gar etwas kleiner als die Breite des Lasers bei der Bearbeitung, so dass zur Wahrung der Bildqualität des aufgebrachten Texturmusters eine derartige Subpixel-Interpolation weder nötig noch vorteilhaft ist.

Jedoch haben die Erfinder herausgefunden, dass die möglichen Pixelrundungsfehler ohne Subpixel-Interpolation zwar keine merklichen Ortsauflösungsprobleme mit sich bringen, jedoch zu dem Auftreten von extrem kurzen Laserspursegmentabschnitten führen können, die kaum sichtbar sind und auch keine nennenswerte Größe aufweisen (eine Länge derartiger Abschnitte ist kürzer als die Pixelbreite), jedoch zu merklichen Winkelabweichungen am Laserspursegment führen können, so dass unerwartet Probleme auftreten können, wenn die Abschnitte nicht in einer Segmentsequenz abfahrbar sind, so dass die Bearbeitungszeit unnötig und aus nicht einfach nachvollziehbaren Gründen nachteilig verlängert wird.

Dies kann durch Subpixel-Interpolation, insbesondere bevorzugt in lateraler Richtung quer relativ zu den Spurlinien, verbessert werden, ohne eine noch höher aufgelöste Bilddatei bei höheren Datenmengen bereitstellen zu müssen. So kann die Bearbeitungszeit durch weitere Optimierung der Spursegmentdatenerzeugung weiter reduziert werden.

Vorzugsweise wird bei der Subpixel-Interpolation eine Koordinateninterpolation in einer quer oder senkrecht relativ zu der Richtung der entsprechenden Spurlinie liegenden lateralen Richtung durchgeführt.

Vorzugsweise weist die in den Modelldaten angegebene dreidimensionale Geometrie eine Mehrzahl von Polygonflächen auf, und insbesondere führt eine beim Erzeugen von Spursegmentdaten durchgeführte Projektion einer geraden Spurlinie auf die in den Modelldaten angegebene dreidimensionale Geometrie aufgrund eines oder mehrerer Übergänge zwischen zueinander geneigten, benachbarten Polygonflächen zu einer Abbildung der geraden Spurlinie auf eine Ecken aufweisende Spurlinie.

Dies kann zum Beispiel eine Geometrie mit dreieckigen Polygonflächen und/oder n-eckigen Polygonflächen mit n > 3 sein. Hierbei können auch bereits auf der Oberfläche zusätzliche zweidimensionale Koordinaten vorgesehen sein, die die Abbildung vom zwei- in den dreidimensionalen Koordinatenraum beschreiben. Dies können z.B. UV-Koordinaten sein.

Vorzugsweise wird für eine beim Erzeugen von Spursegmentdaten mittels Projektion einer geraden Spurlinie auf die in den Modelldaten angegebene dreidimensionale Geometrie ermittelte Spurlinie eine numerische Glättung durchgeführt. Bevorzugt werden Koordinaten von auf der entsprechenden Spurlinie liegenden Laserspursegmenten auf Basis der numerisch geglätteten Spurlinie ermittelt.

Dies hat den Vorteil, dass etwaige Ecken in Spurlinien oder Spurliniensegmenten bzw. Laserspursegmenten, die aufgrund der Polygonflächenübergänge auftreten können, numerisch geglättet werden können, wodurch die Kollinearität der ermittelten Laserspursegmente bei der Erzeugung der Spursegmentdaten noch weiter erhöht werden kann.

Vorzugsweise weist die numerische Glättung einen im dreidimensionalen Raum durchgeführten ersten Glättungsvorgang auf, bei dem Ecken der entsprechenden Spurlinie geglättet werden, bevorzugt derart, dass die geglättete Spurlinie an Positionen der zuvor vorhandenen Ecken abgerundete Verläufe aufweist.

Dies hat den Vorteil, dass etwaige Ecken in Spurlinien oder Spurliniensegmenten bzw. Laserspursegmenten, die aufgrund der Polygonflächenübergänge auftreten können, numerisch geglättet werden können, wodurch die Kollinearität der ermittelten Laserspursegmente bei der Erzeugung der Spursegmentdaten noch weiter erhöht werden kann.

Vorzugsweise weist die numerische Glättung einen in Lasereinfallrichtung durchgeführten zweiten Glättungsvorgang auf, bei dem die mittels des ersten Glättungsvorgangs geglättete Spurlinie in Richtung der parallel zur Lasereinfallrichtung ausgerichteten Richtung geglättet wird, bevorzugt derart, dass die weiter geglättete Spurlinie relativ zu der ungeglätteten Spurlinie flacher an einer senkrecht zur Lasereinfallrichtung ausgerichteten Ebene verläuft.

Dies hat den Vorteil, dass etwaige Ecken in Spurlinien oder Spurliniensegmenten bzw. Laserspursegmenten, die aufgrund der Polygonflächenübergänge auftreten können, noch weiter numerisch geglättet werden können, wodurch die Kollinearität der ermittelten Laserspursegmente bei der Erzeugung der Spursegmentdaten noch weiter erhöht werden kann. Hierbei wird in Kauf genommen, dass die Ortsgenauigkeit in Lasereinfallsrichtung signifikant reduziert wird (zugunsten der erheblich reduzierbaren Bearbeitungszeit) und die Ortsabweichung von der tatsächlichen Oberflächenposition abweicht. Jedoch ist dies ohne größere nachteilige Effekte tolerierbar, da die Positionen senkrecht zur Lasereinfallrichtung exakt positioniert bleiben und etwaige Verschiebungen in Lasereinfallrichtung die erreichbare Bildqualität kaum beeinflussen.

In Abstandsrichtung (Lasereinfallsrichtung) toleriert der Laserprozess durch die Strahlkaustik und Rayleigh-Länge aber wesentlich höhere Abweichungen (je nach Brennweite und Strahlqualität bis hin zu einigen Zehntel mm), als seitlich dazu. Dadurch kann man die Koordinaten in dieser Richtung deutlich stärker glätten bzw. glättend verfälschen, als dies lateral möglich wäre. Die übertriebene Glättung führt zu kleinen Abweichungen in der Fokuslage bezogen auf die Oberfläche, die im Rahmen einer Toleranz nicht sichtbar wird, aber sehr viel Rauheit aus der Sequenz nimmt. In drei Dimensionen betrachtet erscheint die Kurve somit wesentlich kollinearer und die Ausgabe kann von der Anzahl her längere Segmentsequenzen mit höherer Zeiteinsparung generieren.

Vorzugsweise geben die Bilddaten ein Pixelbild des Texturmusters an, wobei jedem Pixel des Pixelbilds bevorzugt ein Pixelwert zugeordnet ist, der vorzugsweise eine vorbestimmte Tiefe des auf der Werkzeugoberfläche aufzubringenden Texturmusters an der entsprechenden Position des Texturmusters angibt.

Dies hat den Vorteil, dass das Pixelbild auf einfache und effiziente Weise für mehrere Bearbeitungsschritte zur Herausarbeitung in verschiedenen Tiefen verwendet werden kann, ohne für jede Tiefenschicht individuelle Bilddaten bereitstellen zu müssen.

Vorzugsweise werden für verschiedene Tiefenebenen des Texturmusters auf Basis der Pixelwerte des Pixelbilds individuelle Spursegmentdaten erzeugt, bevorzugt derart, dass das Texturmuster entsprechend unterschiedlicher Tiefenebenen in hintereinanderliegenden Bearbeitungsvorgängen auf Basis der auf Grundlage der jeweiligen Spursegmentdaten erzeugten Steuerdaten herausgearbeitet werden.

Gemäß einer besonders zweckmäßigen Ausführung werden in numerischen Berechnungen des Verfahrens beim Erzeugen der Spursegmentdaten die Koordinaten der Bild- und/oder Modelldaten, insbesondere einschließlich der der Koordinatenabbildung zugrundeliegenden zwei-und/oder dreidimensionalen Koordinaten, mit einer Ortsauflösung ausgelesen, die vorzugsweise mindestens eine Auflösungsgenauigkeit von 1/1000 der Breite des Lasers auf der Werkstückoberfläche, des Abstands benachbarter Spurlinien, einer Polygongröße der Modelldaten, oder einer Pixelbreite der Bilddaten aufweist, insbesondere bevorzugt eine Genauigkeit von mindestens 1/10000 einer der vorstehenden Größen. Gemäß einer besonders zweckmäßigen Ausführung werden in numerischen Berechnungen des Verfahrens beim Erzeugen der Spursegmentdaten die Koordinaten der Bild- und/oder Modelldaten, insbesondere einschließlich der der Koordinatenabbildung zugrundeliegenden zwei- und/oder dreidimensionalen Koordinaten, mit einer Ortsauflösung ausgelesen, die vorzugsweise mindestens eine Auflösungsgenauigkeit von 10 nm aufweist, insbesondere im Wesentlichen eine Auflösungsgenauigkeit von 1 nm.

Dies hat den Vorteil, obschon die Genauigkeiten in Bezug auf die gewünschte Bildauflösung und die Breite des Lasers bei der Bearbeitung unerwartet und ungewöhnlich genau gewählt sind, dass Rundungsfehler in den numerischen Berechnungen vermieden werden können, die in der Bildortsauflösung keine Rolle spielen würden, aber in Bezug auf Richtungsabweichungen kleiner Laserspursegmente überraschend große Winkelabweichungen bzw. Abweichungen von der Kollinearität verursachen können. Somit kann auf besonders überraschende Weise die Kollinearität der Laserspursegmente erhöht werden und die Bearbeitungszeit signifikant reduziert werden, da noch mehr Laserspursegmente in gemeinsamen Segmentsequenzen integrierbar sind.

Gemäß einer besonders zweckmäßigen Ausführung umfasst jede Segmentsequenz ein Anfangsüberfahrtsegment (Anfahrsegment), das der Laser in ausgeschaltetem Zustand beschleunigend bis zu der Bearbeitungssollgeschwindigkeit überfährt, und ein Endüberfahrtssegment (Bremssegment), das der Laser in ausgeschaltetem Zustand von der Bearbeitungssollgeschwindigkeit abbremsend überfährt. Bei vorliegender Kollinearität umfassen die Segmentsequenzen mehrere hintereinander angeordnete Laserspursegmente, die jeweils durch Überfahrtsegmente getrennt sind, die mit ausgeschaltetem Laser "fliegend" bei im Wesentlichen gleichbleibender Geschwindigkeit durchfahren werden können. Dies ermöglicht die signifikante Reduzierung der Bearbeitungszeit.

Gemäß einem weiteren Aspekt der Erfindung wird ein Verfahren zum Erzeugen von Spursegmentdaten zur Verwendung bei dem Erzeugen von Steuerdaten für ein Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine, gemäß einem der vorstehenden Aspekte vorgeschlagen.

Vorzugsweise geben die Steuerdaten für jede Spurlinie eine oder mehrere Segmentsequenzen an und weist jede Segmentsequenz Spursegmente auf, entlang derer der Laser zum Aufbringen des Texturmusters auf dem zumindest einen Abschnitt der Werkstückoberfläche geführt wird, und wobei die Spursegmente einer Segmentsequenz ein oder mehrere Laserspursegmente umfassen, die der Laser in eingeschaltetem Zustand mit einer im Wesentlichen konstanten Bearbeitungssollgeschwindigkeit überfährt.

Das Verfahren umfasst bevorzugt: Bereitstellen von Bilddaten, die ein Bild des auf dem zumindest einen Abschnitt der Werkstückoberfläche aufzubringenden Texturmusters angeben, und Modelldaten, die eine dreidimensionale Geometrie einer Oberflächenform entsprechend des zumindest einen Abschnitts der Werkstückoberfläche angeben; und Erzeugen von Spursegmentdaten auf Grundlage der Bilddaten und der Modelldaten, wobei die Spursegmentdaten für eine Mehrzahl von an dem Abschnitt der Werkstückoberfläche verlaufenden Spurlinien in Abhängigkeit des Texturmusters jeweilsleine Mehrzahl von entlang der jeweiligen Spurlinie hintereinander verlaufenden Laserspursegmenten angeben.

Vorzugsweise werden die Spursegmentdaten auf Grundlage der Bilddaten und Modelldaten mit der Maßgabe erstellt, dass für jede Spurlinie die Anzahl benachbarter Laserspursegmente, die im Wesentlichen kollinear relativ zueinander angeordnet sind, vergrößert wird, und insbesondere maximiert wird, bevorzugt derart, dass beim Erzeugen der Steuerdaten die Anzahl der benachbarten Laserspursegmente einer Spurlinie, die im Wesentlichen kollinear zueinander ausgerichtet sind und in einer gemeinsamen Segmentsequenz integrierbar sind, vergrößert wird, und insbesondere maximiert wird.

Zusammenfassend werden Aspekte und bevorzugte Ausführungen vorgeschlagen, um Verfahren zum Bearbeiten eines Werkstücks zum Aufbringen eines Musters mittels eines Lasers bereitzustellen, mit denen die Bearbeitungszeit bei dem Bearbeiten des Werkstücks und insbesondere dem Aufbringen des Musters deutlich reduziert werden und gleichzeitig die Güte des erzeugten Musters beibehalten werden kann.

Um die Vorteile dieser vorgeschlagenen Verfahren größtmöglich ausnutzen zu können, ist es besonders vorteilhaft, wenn eine Laservorrichtung zum Einsatz an einer Werkzeugmaschine bzw. eine Werkzeugmaschine mit einer derartigen Laservorrichtung für die Bearbeitung eines Werkstücks nach den vorstehend beschriebenen Verfahrensaspekten eingesetzt wird, über einen Laser mit sehr hoher Pulsfrequenz verfügt. Dies hat den Vorteil, dass die höheren erreichbaren Bearbeitungsgeschwindigkeiten bei dem Überfahren der im Durchschnitt längeren Berabeitungssegmente (insbesondere "ohne Pilgerschritt") genutzt werden können, ohne durch eine zu langsame maximal erreichbare Pulsfrequenz die Liniengüte der mit eingeschaltetem Laser überfahrenen Laserspursegmente negativ zu beeinflussen.

Hierfür können vorzugsweise Pulsfrequenzen im Bereich von 100 kHz bis zu 1 MHz angewendet werden, so dass der Geschwindigkeitsvorteil der höheren Bearbeitungssollgeschwindigkeiten, die aufgrund der kollinear angeordneten Bearbeitungssegmente (Laserspursegmente) und der dadurch optimierten (jeweils im Durchschnitt längeren) Segmentsequenzen, die jeweils über viele Laserspursegmente hinweg "ohne Pilgerschritt" mit höherer Bearbeitungssollgeschwindigkeit überfahren werden können, auch wirklich in größerem Maße auf die Werkstückoberfläche übertragen werden kann. Dies ermöglicht eine noch weitere bzw. deutlichere reduzierte Bearbeitungszeit.

Beispielsweise wird bevorzugt eine Laserpulsüberlappung von größer oder gleich 50% erreicht, bevorzugt größer oder gleich 75%, um eine hohe Bearbeitungsqualität zu gewährleisten. Hierfür werden z.B. bei vorgegebenem Durchmesser (Breite) des Lasers bei der Bearbeitung auf der Werkstückoberfläche vorzugsweise die Pulsfrequenz und die maximale Bearbeitungsgeschwindigkeit (d.h. die maximale Geschwindigkeit, mit der der Laser Laserspursegmente bzw. dazwischenliegende Überfahrtsegmente überfährt) derart gewählt, dass ein Verhältnis der maximalen Bearbeitungsgeschwindigkeit zu der Laserpulsfrequenz gewählt ist, das kleiner oder gleich des halben Durchmessers (Breite) des Lasers ist, um z.B. mindestens eine Laserpulsüberlappung von größer oder gleich 50% zu erreichen, bzw. das kleiner oder gleich ¾ des Durchmessers (Breite) des Lasers ist, um z.B. mindestens eine Laserpulsüberlappung von größer oder gleich 75% zu erreichen. Wird hierbei die Pulsfrequenz erhöht, kann dadurch gleichzeitig die maximale Bearbeitungsgeschwindigkeit erhöht werden, da das Verhältnis maßgebend ist.

Eine weitere, besonders vorteilhafte Konfiguration einer Werkzeugmaschine, die gegebenenfalls bevorzugt bereits über einen Laser mit sehr hoher Pulsfrequenz verfügt, stellt die Erweiterung der den Laser umfassenden Laservorrichtung dieser Werkzeugmaschine mit einer zusätzlichen Divergenzänderungsvorrichtung dar. Eine derartige Divergenzänderungsvorrichtung ist z.B. aus der DE 10 2012 111 098 B4 bekannt.

Ein Laser-Scannersystem weist üblicherweise sehr schnell zustellende Achsen (im Bereich von 5 m/s bis 10 m/s oder sogar darüber hinaus) in der X,Y-Ebene (d.h. in der Ebene im Wesentlichen senkrecht zur Lasereinfallsrichtung bzw. Laserstrahlrichtung) auf, so dass ebene Oberflächen mit dem Laser-Scannersystem durch schnelle Laserzustellgeschwindigkeiten im Wesentlichen senkrecht zu der Lasereinfallsrichtung sehr schnell bearbeitet werden können.

Doch ist anstatt einer ebenen Oberfläche nun eine Freiformoberfläche im 3D-Raum zu bearbeiten, so muss das System wieder mit langsameren Geschwindigkeiten gesteuert werden, da für die Zustellung in Z-Richtung (d.h. im Wesentlichen in Richtung der Lasereinfallrichtung) üblicherweise lediglich eine mechanisch verfahrbare Achse zur Verfügung steht, so dass im 3D-Raum nicht optimiert hohe Bearbeitungsgeschwindigkeiten erreichbar sind. An dieser Stelle kann nun auf die vorteilhaften Eigenschaften einer Divergenzänderungsvorrichtung zurückgegriffen werden, die signifikant höhere Zustellgeschwindigkeiten in Z-Richtung ermöglicht, so dass auch im 3D-Raum mit allen drei linearen translatorischen Freiheitsgraden X, Y und Z deutlich höhere Bearbeitungsgeschwindigkeiten erreichbar sind, insbesondere entlang von Spurlinien, die im 3D-Raum auf Freiformflächen liegen.

Die Divergenzänderungsvorrichtung kann beispielsweise den Divergenzwinkel eines Laserstrahls derart variabel einstellen, dass der Fokuspunkt des Laserstrahls mit schnell veränderbarem Fokusabstand auf das zu bearbeitende Werkstück fokussiert werden kann. Da es aufgrund der Struktur der Werkstückoberfläche zu unterschiedlichen Entfernungen zwischen einer Laserquelle und dem Werkstück kommen kann, kann es notwendig sein, den Laserstrahl in kürzester Zeit zu fokussieren, um eine effiziente und präzise Energieübertragung vom Laserstrahl auf das Werkstück zu erzielen.

Die Divergenzänderungsvorrichtung, deren optisch wirksame Elemente vorzugsweise telezentrisch angeordnet sind, kann dabei ein Reflexionssystem (z.B. ein parabelförmiger Reflektor) oder ein telezentrisches Brechungssystem (z.B. ein Linsensystem) aufweisen. Eine Strahlablenkvorrichtung (z.B. ein sich drehender Spiegel) lenkt den Laserstrahl innerhalb der Divergenzänderungsvorrichtung auf die entsprechend optisch wirksamen Elemente ab und kann so den Verlauf des Laserstrahls und seine Bündelung/Fokussierung beeinflussen.

Durch die vorteilhafte Weiterentwicklung einer Werkzeugmaschine mittels eines Lasers mit sehr hoher Pulsfrequenz und der Divergenzänderungsvorrichtung ist es möglich, den Geschwindigkeitsvorteil aufgrund der möglichst kollinear angeordneten Bearbeitungssegmente auch auf Werkstückoberflächen (z.B. mit 3D-Freiformflächen) im dreidimensionalen Raum zu übertragen, so dass die Bearbeitung von Werkstückoberflächen noch weiter optimiert werden können und dadurch eine noch deutlicher reduzierte Bearbeitungszeit erzielt werden kann. Dies ist besonders zweckmäßig, wenn dies mit einem Laser kombiniert wird, der höhere Pulsfrequenzen ermöglicht, insbesondere bevorzugt größer oder gleich 100 kHz, besonders bevorzugt größer oder gleich 400 kHz, bzw. noch optimaler bei größer oder gleich 800 kHz bis zu über 1 MHz.

Des Weiteren wird eine Steuervorrichtung zum Einsatz an einer numerisch gesteuerten Werkzeugmaschine, die eine Laservorrichtung zur Bearbeitung zumindest einer Werkstückoberfläche zum Aufbringen eines Texturmusters auf zumindest einem Abschnitt der Werkstückoberfläche mittels eines Lasers der Laservorrichtung umfasst, vorgeschlagen.

Bevorzugt ist die Steuervorrichtung dazu eingerichtet, ein Verfahren gemäß einem der vorstehenden Ansprüche an der Werkzeugmaschine auszuführen.

Bevorzugt ist die Steuervorrichtung dazu eingerichtet, die Werkzeugmaschine auf Basis der in einem Verfahren gemäß einem der vorstehenden Ansprüche erzeugten Steuerdaten zu steuern, die für jede Spurlinie eine oder mehrere Segmentsequenzen angeben und jede Segmentsequenz Spursegmente aufweist, entlang derer der Laser zum Aufbringen des Texturmusters auf dem zumindest einen Abschnitt der Werkstückoberfläche geführt wird, und wobei die Spursegmente einer Segmentsequenz ein oder mehrere Laserspursegmente umfassen, die der Laser in eingeschaltetem Zustand mit einer im Wesentlichen konstanten Bearbeitungssollgeschwindigkeit überfährt.

Bevorzugt ist die Steuervorrichtung dazu eingerichtet, auf Basis von bereitgestellten Modelldaten, die eine dreidimensionale Geometrie einer Oberflächenform entsprechend des zumindest einen Abschnitts der Werkstückoberfläche angeben, und bereitgestellten Bilddaten, die ein Bild des auf dem zumindest einen Abschnitt der Werkstückoberfläche aufzubringenden Texturmusters angeben, Laserspursegmentdaten zu erzeugen, wobei die Spursegmentdaten für eine Mehrzahl von an dem Abschnitt der Werkstückoberfläche verlaufenden Spurlinien in Abhängigkeit des Texturmusters jeweils eine Mehrzahl von entlang der jeweiligen Spurlinie hintereinander verlaufenden Laserspursegmenten angeben, wobei die Spursegmentdaten auf Grundlage der Bilddaten und Modelldaten mit der Maßgabe erstellt werden, dass für jede Spurlinie die Anzahl benachbarter Laserspursegmente, die im Wesentlichen kollinear relativ zueinander angeordnet sind, vergrößert wird, und insbesondere maximiert wird.

Bevorzugt ist die Steuervorrichtung dazu eingerichtet, auf Basis von erzeugten oder bereitgestellten Laserspursegmentdaten die Steuerdaten zu erzeugen.

Bevorzugt werden die Steuerdaten derart erzeugt, dass jede zumindest zwei Laserspursegmente aufweisende Segmentsequenz zwischen zwei benachbarten Laserspursegmenten, die im Wesentlichen kollinear zueinander ausgerichtet sind, jeweils ein Überfahrtsegment aufweist, das der Laser in ausgeschaltetem Zustand mit der im Wesentlichen konstanten Bearbeitungssollgeschwindigkeit überfährt.

Des Weiteren wird eine Werkzeugmaschine vorgeschlagen, mit einer vorstehend beschriebenen Steuervorrichtung; und/oder einer Laservorrichtung mit einem Laser der von einer Steuervorrichtung der Werkzeugmaschine (z.B. von der vorstehend beschriebenen Steuervorrichtung) in drei Richtungen gesteuert über eine Werkstückoberfläche führbar ist, insbesondere zum Aufbringen eines Texturmusters auf zumindest einem Abschnitt der Werkstückoberfläche mittels des Lasers der Laservorrichtung.

Bevorzugt ist der Laser in einer Richtung im Wesentlichen senkrecht relativ zu der Richtung des Laserstrahls des Lasers mit Bearbeitungsgeschwindigkeiten von größer oder gleich 2 m/s verfahrbar, insbesondere größer oder gleich 4 m/s, insbesondere bevorzugt größer oder gleich 10 m/s.

Bevorzugt weist die Laservorrichtung zum Steuern des Lasers in einer im Wesentlichen in Richtung des Laserstrahls des Lasers ausgerichteten Richtung eine Divergenzänderungsvorrichtung auf.

Bevorzugt ist der Laser in Richtung des Laserstrahls des Lasers mit Bearbeitungsgeschwindigkeiten von größer oder gleich 4 m/s verfahrbar, insbesondere bevorzugt größer oder gleich 10 m/s.

Bevorzugt ist der Laser in Richtung des Laserstrahls des Lasers mit einer maximalen Bearbeitungsgeschwindigkeit verfahrbar, die im Wesentlichen gleich oder größer ist, wie eine maximale Bearbeitungsgeschwindigkeit des Lasers in einer Richtung im Wesentlichen senkrecht relativ zu der Richtung des Laserstrahls des Lasers.

Bevorzugt ist der Laser der Laservorrichtung dazu eingerichtet, mit einer Pulsfrequenz von größer oder gleich 200 kHz betrieben zu werden, insbesondere größer oder gleich 400 kHz und insbesondere bevorzugt größer oder gleich 800 kHz.

Des Weiteren wird eine Computervorrichtung vorgeschlagen bzw. ein Computerprogrammprodukt, mit einem Computerprogramm, welches Instruktionen aufweist, die bei Ausführen an einem Computer den Computer dazu einrichtet, ein Verfahren mit Schritten der vorstehenden Aspekte, insbesondere des Erzeugens der Spursegmentdaten und/oder des Erzeugens der Steuerdaten, auszuführen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1A: zeigt beispielhaft schematisch Segmente mehrerer Bearbeitungs-sequenzen mit jeweiligen Laserspursegmenten zur Illustration des Problems des "Pilgerschritts",
- Fig. 1B: zeigt beispielhaft eine Bearbeitungssequenz mit zwei benachbarten kollinearen Laserspursegmenten,
- Fig. 2A: zeigt beispielhaft ein Ablaufdiagramm eines Ausführungsbeispiels des erfindungsgemäßen Verfahrens,
- Fig. 2B: zeigt beispielhaft die Erzeugung von Spursegmentdaten gemäß einer beispielhaften Ausführung,
- Fig. 3: zeigt beispielhaft den Verlauf von Verbindungslinien einzelner Bildpunkte auf Basis von Bilddaten eines Pixelbildes,
- Fig. 4: illustriert beispielhaft eine Subpixel-Interpolation zur Bestimmung der Positionierung der Laserspursegmente auf Basis der Bilddaten eines Pixelbildes,
- Fig. 5A: illustriert beispielhaft eine aus dem 2D-Raum der Bilddaten auf die Oberfläche gemäß 3D-Polygon-Modelldaten eines dreidimensionalen Werkstücks abgebildete Spurlinie,
- Fig. 5B: illustriert beispielhaft einen durch Projektion auf die Oberfläche gemäß Polygon-Modelldaten entstehenden Verlauf der projizierten Spurlinie im Querschnitt zur Oberfläche,
- Fig. 6A: zeigt beispielhaft Winkelrichtungen von Richtungsvektoren von Laserspursegmenten mit einer geringen Ortsauflösung und ohne Interpolation,
- Fig. 6B: zeigt beispielhaft Winkelrichtungen von Richtungsvektoren von Laserspursegmenten mit einer hohen Ortsauflösung und mit Interpolation,
- Fig. 7: Illustriert beispielhaft eine Koordinatenmodifikation von Koordinaten von Laserspursegmenten zur Erhöhung der Kollinearität der Laserspursegmente der Spursegmentdaten,
- Fig. 8: zeigt Verläufe einer projizierten Spurlinie nach Projektion, nach Glättung der Ecken und nach Glättung der Kurve der Spurlinie in Richtung der Lasereinfallsrichtung Z, und
- Fig. 9: zeigt beispielhaft eine Vielzahl von parallel verlaufenden Spurlinien mit jeweiligen gemäß des Texturmusters der Bilddaten ermittelten Laserspursegmenten.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele im Rahmen des Schutzumfanges der unabhängigen Ansprüche umfasst sind. Ferner sei darauf hingewiesen, dass nicht in jeder Figur alle in der Beschreibung der jeweiligen Figur genannten Bezugszeichen vorhanden sind. In solchen Fällen wird auf die vorherigen Figurenbeschreibungen verwiesen.

Fig. 1A zeigt beispielhaft Bearbeitungssequenzen 10 mit mehreren Bearbeitungssegmenten 12, anhand dieser der Laser (beispielhaft ein gepulster Laser, z.B. mit erreichbaren Pulsfrequenzen von größer oder gleich 100 kHz, insbesondere mit erreichbaren Pulsfrequenzen von größer oder gleich 500 kHz bzw. größer oder gleich 1 MHz) die Oberfläche des Werkstücks bearbeiten soll.

Bei Anwendung der Sky-Writing-Methode und zu dicht beieinander liegender Bearbeitungssegmente 12 (Laserspursegmente) kommt es zur Überlagerung von Anfahr- und Bremssegmenten 11 (Anfangsüberfahrtsegment) und 13 (Endüberfahrtssegment). Der Laser wird nun aufgrund der Sky-Writing-Methode das Bremssegment 13 zu Ende fahren, zurück setzen, und dann wieder mit dem Anfahrsegment 11 beginnen, wie dies im unteren Abschnitt der Fig. 1A gezeigt ist.

Der daraus resultierende "Pilgerschritt" des Lasers kann bei sehr filigranen Texturen mit entsprechend kurzen und sehr nah beieinander liegenden Bearbeitungssegmenten 12 zu einer extremen Erhöhung der Bearbeitungszeit führen.

Um dies zu vermeiden, werden Spursegmentdaten derart erzeugt, dass hintereinanderliegende Laserspursegmente 12 im Wesentlichen kollinear angegeben werden, so dass diese in einer gemeinsamen Bearbeitungssequenz 10 (Segmentsequenz) integriert werden.

Fig. 1B zeigt beispielhaft eine Bearbeitungssequenz 10 mit zwei benachbarten kollinearen Laserspursegmenten 12 einer gemeinsamen Spurlinie. Die Laserspursegmente haben jeweils die Anfangskoordinaten der Punkte B bzw. D und die Endkoordinaten der Punkte C bzw. E, welche im Wesentlichen kollinear auf einer Geraden liegen. Eine Winkelabweichung sollte hierbei bevorzugt kleiner 3° und besonders bevorzugt kleiner 1,5° sein.

Zwischen den Punkten A und B ist ein Anfangsüberfahrtsegment 11 (Anfahrsegment) angeordnet, dass der Laser in ausgeschaltetem Zustand mit beschleunigender Geschwindigkeit überfährt, so dass spätestens an Punkt B die Bearbeitungssollgeschwindigkeit erreicht ist und an Punkt B der Laser eingeschaltet wird, so dass der Laser zwischen Punkt B und Punkt C bei im Wesentlichen konstanter Bearbeitungsgeschwindigkeit das erste Laserspursegment 12 überfährt und an Punkt C der Laser ausgeschaltet wird.

Zwischen den Punkten C und D ist ein Überfahrtsegment 14 angeordnet, das der Laser "fliegend" (d.h. im Wesentlichen ohne abzubremsen oder zu beschleunigen) bei ausgeschaltetem Laser mit der im Wesentlichen konstanten Bearbeitungsgeschwindigkeit überfährt und an Punkt D der Laser eingeschaltet wird, so dass der Laser zwischen Punkt D und Punkt E bei im Wesentlichen konstanter Bearbeitungsgeschwindigkeit das zweite Laserspursegment 12 überfährt und an Punkt E der Laser ausgeschaltet wird.

Zwischen den Punkten E und F kann der Laser dann an dem Endüberfahrtsegment 13 (Bremssegment) bei ausgeschaltetem Laser wieder abbremsen. So können anders als in der Sky-Writing Methode, bei der jeweils nur ein Laserspursegment in einer Segmentsequenz bearbeitet wird nunmehr zwei oder mehr Laserspursegmente 12 in einer gemeinsamen Segmentsequenz integriert werden und ohne dazwischen liegendes Abbremsen und erneutes Beschleunigen überfahren werden, so dass eine Wesentliche Bearbeitungszeitreduzierung ermöglicht ist.

Ziel ist es hierbei die Koordinaten der Laserspursegmente beim Erzeugen der Spursegmentdaten, die diese Koordinaten angeben, möglichst kollinear anzuordnen bzw. die Zahl der im Wesentlichen kollinearen Laserspursegmente zu erhöhen, derart, dass möglichst viele Segmentsequenzen mit mehreren Laserspursegmenten bzw. möglichst vielen in der Segmentsequenz intergierten Laserspursegmenten bereit gestellt werden, bevor die Steuerdaten, die die gesamten Segmentsequenzen angeben, auf Basis der Spursegmentdaten erzeugt werden.

Zunächst werden beispielhaft 2D-Bilddaten anhand einer Rastergrafik bzw. eines Pixelbilds und 3D-Modelldaten bereitgestellt, die einerseits Angaben über die Oberflächenform des zu bearbeitenden Werkstücks sowie andererseits der durch den Laser aufzubringenden Textur beinhalten. Die Bilddaten, vor allem die Daten bezüglich der aufzubringenden Textur, können vorzugsweise durch eine Bitmap-Datei oder einen anderen Typ von Rastergrafik bereitgestellt werden. Die geometrischen Informationen des entsprechenden Werkstücks der Modelldaten können zum Beispiel mittels einer OBJ-Datei oder anderer 3D-Modelldatenformate zur Verfügung gestellt werden, welche in einem späteren Schritt verwendet werden.

Nach der Bereitstellung der Bild- und Modelldaten können die Bild- und Modelldaten numerisch aufbereitet werden und auf Basis der Textur der Bilddaten und der Oberflächenform der Modelldaten Spursegmente bzw. Laserspursegmente ermittelt werden, die der Laser zum Aufbringen der Textur auf der Werkstückoberfläche in eingeschaltetem Zustand zu überfahren hat. Ziel ist es, die in der Rastergrafik gefassten Bildpunkte, entlang dieser der Laser die Oberfläche des Werkstücks bearbeiten würde, so aufzubereiten, dass möglichst viele Laserspursegmente einer Spurlinie im Wesentlichen kollinear angeordnet sind.

Hierfür können verschiedenste numerische Verfahren zum Einsatz kommen. Ein Beispiel wäre das mathematische Glätten von Kurvenbahnen. Hierbei soll eine Kurve in eine Kurve mit geringerer Krümmung überführt werden, wobei gleichzeitig möglichst wenig vom Original abgewichen werden sollte. Im Speziellen können sich Näherungspolynome niedrigerer Ordnung dafür als überaus vorteilhaft erweisen.

Eine weitere Möglichkeit ist das Interpolieren (z.B. durch Subpixel-Interpolation) der Rastergrafik. Hierbei können einzelne Bildpunkte, besonders welche, die eine vergleichsweise große Abweichung zu den umliegenden, dicht beieinander angeordneten Bildpunkten aufweisen, aus der Rastergrafik "herausgenommen" werden. Hierdurch können eventuell später auftretende Richtungsänderungen bei der Erzeugung der Verbindungslinie von im Wesentlichen kollinearen Bildpunkten reduziert werden. Im Anschluss daran können dann wieder Glättungsverfahren und dergleichen für die weitere Optimierung der Rastergrafik herangezogen werden.

Im nächsten Schritt wird das Pixelbild oder die Werkstückoberfläche in Bearbeitungsflächenabschnitte unterteilt, die der Reihe nach durch den Laser bearbeitet werden sollen. Die Bearbeitung des jeweiligen Flächenabschnitts ist dabei abhängig von der entsprechenden Zielgeometrie, die sich aus den geometrischen Informationen zum Werkstück und der aufzubringenden Textur zusammensetzt.

Je nach geometrischer Beschaffenheit des Werkstücks können die entstehenden Flächenabschnitte relativ groß, mit mehreren Millimetern Kantenlänge, oder aber auch vergleichsweise sehr klein mit einer Kantenlängen im unteren µm-Bereich sein.

Im darauf folgenden Schritt wird jeder der Bearbeitungsflächenabschnitte durch das Festlegen einer Mehrzahl von linearen Bearbeitungssequenzen 10, entlang derer der Laser durch ein Scannersystem geführt wird, ausschraffiert. Ausschraffieren bedeutet hierbei, dass eine Mehrzahl von parallel zueinander verlaufenden Spurlinien über den Abschnitt gelegt werden und auf die 3D-Oberfläche gemäß den Modelldaten projiziert werden, wobei zudem Überlappungen mit dem Texturmuster der Bilddaten ermittelt werden, um die auf den Laserspurlinien liegenden Laserspursegmente zu ermitteln.

Jede lineare Bearbeitungssequenz umfasst später eine Gruppe von Bildpunkten der Rastergrafik/des Pixelbildes und kann im Wesentlichen in ein Startsegment 11 (Anfangsüberfahrtsegment) und ein Endsegment 13 (Endüberfahrtsegment), bei dem der Laser im ausgeschalteten Zustand beschleunigt (Startsegment 11) oder gebremst (Endsegment 13) wird, und in ein oder mehrere Bearbeitungssegmente 12 (Laserspursegmente), bei dem der Laser im eingeschalteten Zustand bei beispielsweise gleichbleibender Geschwindigkeit bewegt wird, unterteilt werden, wobei zwischen Bearbeitungssegmenten/Laserspursegmenten 12 einer Bearbeitungssequenz (Segmentsequenz) jeweilige Überfahrtsegmente 14 angeordnet werden.

Aufgrund der im Wesentlichen kollinear vorhandenen Bildpunkte bzw. Laserspursegmente aus der im Vorfeld ergangenen Bilddatenaufbereitung oder nachgehenden Datenmodifizierung können diese besonders vorteilhaft auf die linearen Bearbeitungssequenzen abgebildet werden, so dass sich eine Vielzahl an vergleichsweise langen Bearbeitungssequenzen (Segmentsequenzen) mit teils mehreren Bearbeitungssegmenten (Laserspursegmenten) bilden können.

Auf Basis der ermittelten Laserspursegmenten bzw. den Koordinaten dieser ermittelten Laserspursegmente, die in Spursegmentdaten ausgegeben werden, werden Steuerdaten erzeugt, die die gesamten Bearbeitungssequenzen (Segmentsequenzen) angeben.

Nun können im nächsten Schritt die die Bearbeitungssequenzen angebenden Steuerdaten an das Scannersystem ausgegeben werden, anhand derer der Laser über die Werkstückoberfläche geführt wird.

Da jede Bearbeitungssequenz über ein Startsegment am Anfang und ein Endsegment am Ende verfügt, jedoch dazwischen mehrere Laserspursegmente und dazwischenliegende Überfahrtsegmente fliegend überfährt, können insgesamt für jeden Bearbeitungsflächenabschnitt die Anzahl der Beschleunigungs- und Bremsvorgänge des Lasers teils deutlich reduziert werden. Dies wiederum führt zu einer deutlichen Reduzierung der Bearbeitungszeit, was besonders bei großflächigen Applikationen wie z.B. Armaturenbrettern für die Fahrzeugindustrie einen erheblichen Einfluss hat.

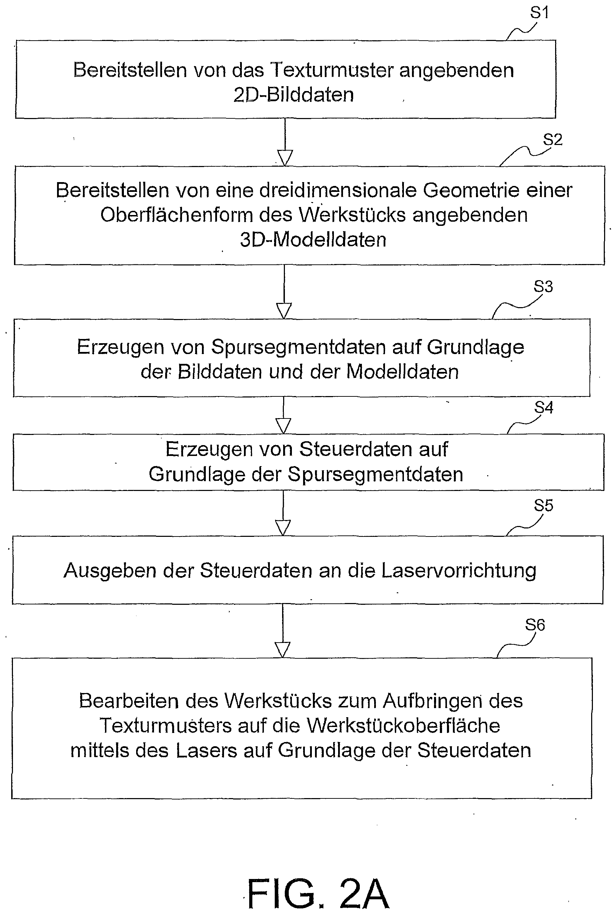

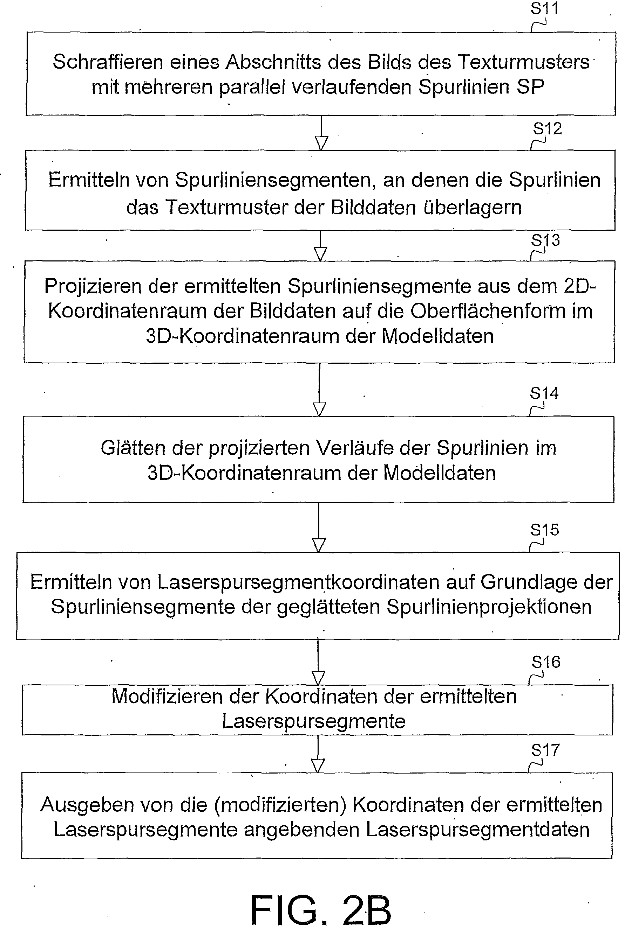

Fig. 2A zeigt ein Ablaufdiagramm eines Ausführungsbeispiels des erfindungsgemäßen Verfahrens und Fig. 2B illustriert beispielhaft die Erzeugung von Spursegmentdaten gemäß einer beispielhaften Ausführung.

Fig. 2A illustriert beispielhaft ein Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine.

Hierbei kann ein Werkstück bereits auf Basis einer Sollgeometrie, wie sie ggf. in 3D-Modelldaten angegeben ist, bearbeitet werden, z.B. durch Fräsen, bis die Sollgeometrie herausgearbeitet ist. Danach kann an der Werkzeugmaschine eine Laservorrichtung bzw. ein Laser-Scannersystem eingesetzt werden, um ein vorbestimmtes Texturmuster auf der Werkstückoberfläche mittels eines Lasers herauszuarbeiten, z.B. durch Lasertexturieren.

Das Verfahren umfasst die Schritte S1 des Bereitstellens von Bilddaten, die ein Bild des auf dem zumindest einen Abschnitt der Werkstückoberfläche aufzubringenden Texturmusters angeben, und S2 des Bereitstellens von Modelldaten, die eine dreidimensionale Geometrie einer Oberflächenform entsprechend des zumindest einen Abschnitts der Werkstückoberfläche angeben.

Im Schritt S3 werden Spursegmentdaten auf Grundlage der Bilddaten und der Modelldaten erzeugt, wobei die Spursegmentdaten für eine Mehrzahl von an dem Abschnitt der Werkstückoberfläche verlaufenden Spurlinien SP in Abhängigkeit des Texturmusters jeweils eine Mehrzahl von entlang der jeweiligen Spurlinie SP hintereinander verlaufenden Laserspursegmenten 12 angeben.

Im Schritt S4 werden Steuerdaten auf Grundlage der erzeugten Spursegmentdaten erzeugt, wobei die Steuerdaten für jede Spurlinie eine oder mehrere Segmentsequenzen 10 angeben und jede Segmentsequenz 10 Spursegmente aufweist, entlang derer der Laser zum Aufbringen des Texturmusters auf dem zumindest einen Abschnitt der Werkstückoberfläche geführt wird, und wobei die Spursegmente einer Segmentsequenz 10 ein oder mehrere Laserspursegmente 12 umfassen, die der Laser in eingeschaltetem Zustand mit einer im Wesentlichen konstanten Bearbeitungssollgeschwindigkeit überfährt.

Im Schritt S5 werden die erzeugten Steuerdaten an die Laservorrichtung bzw. deren Steuervorrichtung ausgegeben, die den Laser zum Aufbringen des Texturmusters auf dem zumindest einen Abschnitt der Werkstückoberfläche auf Grundlage der Steuerdaten steuert (S6).

Insbesondere werden die Spursegmentdaten im Schritt S3 auf Grundlage der Bilddaten und Modelldaten mit der Maßgabe erstellt, dass für jede Spurlinie die Anzahl benachbarter Laserspursegmente, die im Wesentlichen kollinear relativ zueinander angeordnet sind, vergrößert wird, und insbesondere maximiert wird.

Weiterhin werden die Steuerdaten insbesondere derart erzeugt, dass jede zumindest zwei Laserspursegmente 12 aufweisende Segmentsequenz 10 zwischen zwei benachbarten Laserspursegmenten 12, die im Wesentlichen kollinear zueinander ausgerichtet sind, jeweils ein Überfahrtsegment 14 aufweist, das der Laser in ausgeschaltetem Zustand mit der im Wesentlichen konstanten Bearbeitungssollgeschwindigkeit überfährt.

Weiterhin werden die Steuerdaten insbesondere derart erzeugt, dass jede Segmentsequenz 10 ein Anfangsüberfahrtsegment 11, das der Laser in ausgeschaltetem Zustand beschleunigend bis zu der Bearbeitungssollgeschwindigkeit überfährt, und ein Endüberfahrtssegment 13, das der Laser in ausgeschaltetem Zustand von der Bearbeitungssollgeschwindigkeit abbremsend überfährt, umfasst.

Fig. 2B illustriert beispielhaft ein Ablaufdiagramm eines Ausführungsbeispiels eines Verfahrens zum Erzeugen von Spursegmentdaten zur Verwendung bei dem Erzeugen von Steuerdaten für ein Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine.

Nach Bereitstellen der Bild- und Modelldaten (S1, S2) entspricht das Verfahren gemäß Fig. 2B einem Ausführungsbeispiel des Schritts S3 in Fig. 2A.

Beispielhaft wird angenommen, dass die Modelldaten weiterhin eine Koordinatenabbildung von zweidimensionalen Koordinaten eines ersten Koordinatensystems der Bilddaten auf dreidimensionale Koordinaten eines zweiten Koordinatensystems auf der Oberflächenform der Modelldaten angeben, wobei beispielhaft eine erste Koordinatenachse Z im dreidimensionalen Koordinatensystem der Modelldaten im Wesentlichen parallel zur Lasereinfallrichtung bei der Bearbeitung ausgerichtet ist und eine Ebene der beiden anderen Koordinatenachsen X und Y im dreidimensionalen Koordinatensystem der Modelldaten im Wesentlichen senkrecht zur Lasereinfallrichtung bei der Bearbeitung ausgerichtet ist.

Beispielhaft wird weiterhin angenommen, dass die Bilddaten ein Pixelbild des Texturmusters angeben, wobei jedem Pixel des Pixelbilds ein Pixelwert zugeordnet ist, der eine vorbestimmte Tiefe des auf der Werkzeugoberfläche aufzubringenden Texturmusters an der entsprechenden Position des Texturmusters angibt, wobei für verschiedene Tiefenebenen des Texturmusters auf Basis der Pixelwerte des Pixelbilds individuelle Spursegmentdaten erzeugt werden, derart, dass das Texturmuster entsprechend unterschiedlicher Tiefenebenen in hintereinanderliegenden Bearbeitungsvorgängen auf Basis der auf Grundlage der jeweiligen Spursegmentdaten erzeugten Steuerdaten herausgearbeitet werden.

Es werden somit beispielhaft bevorzugt für einen Abschnitt der Werkstückoberfläche mehrere Spursegmentdatensätze ermittelt, wobei jeder Spursegmentdatensatz für eine bestimmte Tiefe des Texturmusters ermittelt wird und der Laser später hintereinander Schicht für Schicht verschiedene Tiefenebenen anhand dem jeweiligen entsprechenden Spursegmentdatensatz abfährt.

Hierbei können die verschiedenen Tiefenebenen in Bezug auf die gleichen Werkstückoberflächenabschnitte abgefahren werden, oder auch die Anordnung der Abschnitte, die jeweils für sich gemäß eigener entsprechender Steuerdaten abgefahren werden, für verschiedene Tiefenebene verschoben sein, so dass sich für verschiedene Tiefenebenen unterschiedliche Abschnittsumrandungen ergeben. Letztendlich kann die Werkstückoberfläche Abschnitt für Abschnitt und/oder Tiefenebene für Tiefenebene hintereinander abgefahren werden. Insgesamt wird jedoch beispielhaft bevorzugt jeweils für einen jeweiligen Abschnitt und eine jeweilige Tiefenebene jeweils ein individueller Satz von zugehörigen Spursegmentdaten erzeugt.

Das Verfahren umfasst für einen Abschnitt (und bevorzugt pro Tiefenebene) einen Schritt S11 des Schraffierens eines dem zumindest einem Abschnitt der Werkstückoberfläche entsprechenden Abschnitt des Bilds des Texturmusters mit einer Mehrzahl von parallel verlaufenden Spurlinien SP.

Hierbei sind die Spurlinien SP bevorzugt Geraden, die parallel zueinander an dem entsprechenden Abschnitt des Bilds des Texturmusters verlaufen und in diesem über das beispielhaft in einem Pixelbild (Rastergrafik) angegebenem Texturmuster gelegt werden.

Weiterhin umfasst das Verfahren beispielhaft einen Schritt S12 des Ermittelns von Spurliniensegmenten, an denen die Spurlinien das Texturmuster in dem entsprechenden Abschnitt des Bilds des Texturmusters überlagern (bzw. an denen die Spurlinien einen Texturmusterbereich mit einem Pixelwertbereich entsprechend der momentanen Tiefenebene in dem entsprechenden Abschnitt des Bilds des Texturmusters überlagen).

Dies ermöglicht es, Laserspursegmente 12 in der Ebene der Bilddaten über dem Texturmuster zu ermitteln, die auf die Oberfläche des Werkstücks in den 3D-Koordinatenraum projiziert werden können.

Hierfür werden bespielhaft auf Basis des Pixelbilds des Texturmusters und den Bereichen der Spurlinien, an denen die Spurlinien das Texturmuster in dem entsprechenden Abschnitt des Bilds des Texturmusters überlagern (bzw. an denen die Spurlinien einen Texturmusterbereich mit einem Pixelwertbereich entsprechend der momentanen Tiefenebene in dem entsprechenden Abschnitt des Bilds des Texturmusters überlagen), jeweilige zweidimensionale Koordinaten im Koordinatensystem der Bilddaten ausgelesen.

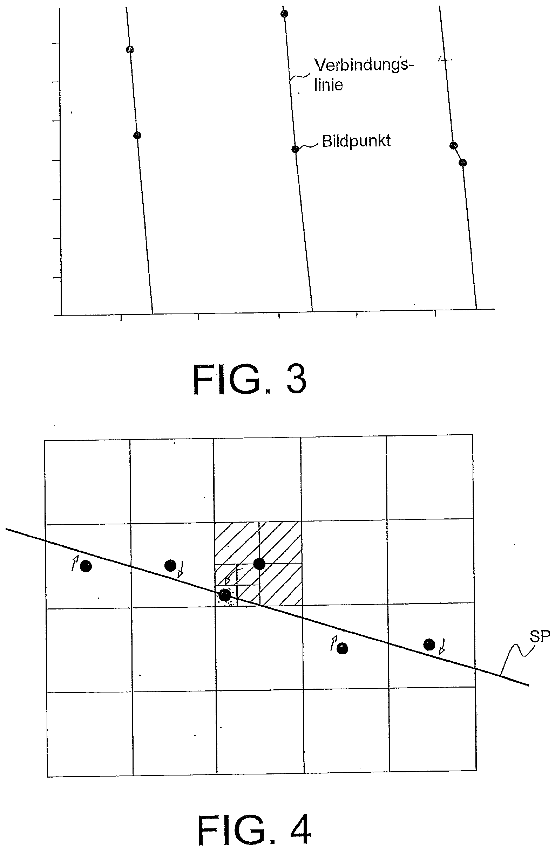

Bevorzugt wird in dem Schritt S12 bei dem Ermitteln von Koordinatenwerten und/oder Pixelwerten für Punkte der Spurlinien eine (optionale) Subpixelinterpolation durchgeführt (siehe z.B. Fig. 4). Bevorzugt wird bei dem Ermitteln von Spurliniensegmenten, an denen die Spurlinien das Texturmuster in dem entsprechenden Abschnitt des Pixelbilds des Texturmusters überlagern (bzw. an denen die Spurlinien einen Texturmusterbereich mit einem Pixelwertbereich entsprechend der momentanen Tiefenebene in dem entsprechenden Abschnitt des Bilds des Texturmusters überlagen), eine Subpixel-Interpolation durchgeführt, bei der eine Pixelwert-und/oder Koordinateninterpolation in einer quer oder senkrecht relativ zu der Richtung der entsprechenden Spurlinie liegenden lateralen Richtung durchgeführt wird.

Beispielhaft wird angenommen, dass die Bilddaten ein Pixelbild des Texturmusters angeben, mit einer Pixelbreite, die größer oder gleich 10% der Breite des Lasers auf der Werkstückoberfläche bei deren Bearbeitung ist, insbesondere größer oder gleich 25% der Breite des Lasers auf der Werkstückoberfläche bei deren Bearbeitung ist. Beispielsweise können die Werte der Pixelbreite im Bereich 10 µm bis 50 µm liegen, besonders bevorzugt bei etwa 15 µm bis 30 µm.

Eine derartige Subpixelinterpolation ermöglicht es, die in Zusammenhang mit Fig. 3 beschriebenen Nachteile zu vermeiden, ohne eine genauere Bildauflösung bereitstellen zu müssen mit unerwünscht hohen Datenmengen, wobei einerseits die erforderliche Bildqualität erreicht wird, aber zudem die Kollinearität der später ermittelten Laserspursegmente 12 einer Spurlinie erhöht bzw. über große Bereiche gewährleistet werden kann.

Weiterhin umfasst das Verfahren beispielhaft einen Schritt S13 des Projizierens der ermittelten Spurliniensegmente auf die dreidimensionale Geometrie der Oberflächenform entsprechend des zumindest einen Abschnitts der Werkstückoberfläche durch Abbilden von zweidimensionalen Koordinaten jedes ermittelten Spurliniensegments aus dem ersten 2D-Koordinatensystem der Bilddaten auf dreidimensionale Koordinaten auf der Oberflächenform der Modelldaten auf Grundlage der Koordinatenabbildung der Modelldaten, derart, dass die für jedes Spurliniensegment im ersten Koordinatensystem dreidimensionale Koordinaten eines entsprechenden Laserspursegments 12 im zweiten Koordinatensystem ermittelt werden.

Eine derartige Koordinatenabbildung kann auf Basis von zusätzlichen Koordinatenabbildungsdaten erfolgen, die eine Abbildungsvorschrift angeben, oder auf Basis von in den Modelldaten umfassten zweidimensionalen Oberflächenkoordinaten auf der Oberflächenform (z.B. UV-Koordinaten auf der Oberfläche im 3D-Raum, die auf der Oberfläche liegende Punkte mit entsprechenden zweidimensionalen Oberflächen-koordinaten in dreidimensionale Koordinaten im 3D-Raum abbilden).

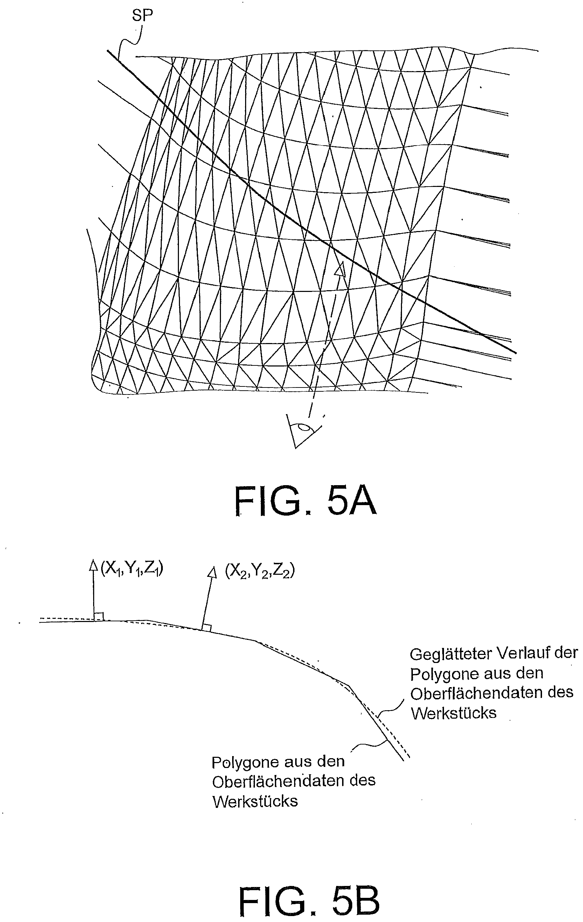

Eine derartige Projektion einer Spurlinie SP ist im Zusammenhang mit den Figs. 5A und 5B beispielhaft illustriert. Beispielhaft weist die in den Modelldaten angegebene dreidimensionale Geometrie eine Mehrzahl von Polygonflächen (Dreiecke und/oder n-Ecke mit n>3) auf, und insbesondere führt eine beim Erzeugen von Spursegmentdaten durchgeführte Projektion einer geraden Spurlinie auf die in den Modelldaten angegebene dreidimensionale Geometrie aufgrund eines oder mehrerer Übergänge zwischen zueinander geneigten, benachbarten Polygonflächen zu einer Abbildung der geraden Spurlinie auf eine Ecken aufweisende Spurlinie (siehe z.B. Fig. 5B).

Im Schritt S14 wird bevorzugt eine (optionale) numerische Glättung der Verläufe der projizierten Spurlinien bzw. mehrere Spurliniensegmente aufweisende Spurlinienabschnitte oder Spurliniensegmente im 3D-Koordinatenraum der Modelldaten durchgeführt (siehe z.B. beispielhafte Ausführungen gemäß Fig. 5 und/oder Fig. 8).

Hierbei wird bevorzugt für eine beim Erzeugen von Spursegmentdaten mittels Projektion einer geraden Spurlinie auf die in den Modelldaten angegebene dreidimensionale Geometrie ermittelte Spurlinie (oder Abschnitte bzw. Segmente der Spurlinie) eine numerischen Glättung durchgeführt, und Koordinaten von auf der entsprechenden Spurlinie liegenden Laserspursegmenten 12 werden dann bevorzugt auf Basis der numerisch geglätteten Spurlinie ermittelt.

Hierbei wird bevorzugt im dreidimensionalen Raum ein Glättungsvorgang durchgeführt, bei dem Ecken der entsprechenden Spurlinie geglättet werden, derart, dass die geglättete Spurlinie an Positionen der zuvor vorhandenen Ecken abgerundete Verläufe aufweist (siehe z.B. die gestrichelte Kurve in Fig. 5B oder die mittlere Kurve in Fig. 8).

Hierbei wird zusätzlich oder alternativ bevorzugt im dreidimensionalen Raum ein Glättungsvorgang in Lasereinfallrichtung durchgeführt, bei dem die projizierte Spurlinie oder die mittels des (oberen ersten) Glättungsvorgangs geglättete Spurlinie in Richtung der parallel zur Lasereinfallrichtung ausgerichteten Richtung geglättet wird, derart, dass die weiter bzw. stärker geglättete Spurlinie relativ zu der ungeglätteten Spurlinie flacher an einer senkrecht zur Lasereinfallrichtung ausgerichteten Ebene verläuft (siehe z.B. die untere Kurve in Fig. 8).

Weiterhin umfasst das Verfahren beispielhaft einen Schritt S15 des Ermittelns von Laserspursegmentkoordinaten auf Grundlage der projizierten und geglätteten Spurliniensegmente. Dies entspricht im Wesentlichen den projizierten Koordinaten aus den in Schritt S12 ermittelten, mit dem Texturmuster überlappenden Bereichen der Spurlinien nach Projektion (und optional nach Subpixel-Interpolation und/oder Glättung) in den 3D-Raum. Hierbei können die Koordinaten von Laserspursegmenten 12, die der Laser in eingeschaltetem Zustand zu überfahren hat, ermittelt werden.

Optional umfasst das beispielhafte Verfahren noch einen weiteren Schritt S16 des Modifizierens der ermittelten Koordinaten der ermittelten Laserspursegmente. Einerseits kann durch numerische Verfahren, wie z.B. der Subpixelinterpolation und/oder den Glättungsverfahren bereits eine Erhöhung der Kollinearität der Laserspursegmente bzw. eine Erhöhung der Anzahl der im Wesentlichen kollinearen Laserspursegmente erzielt werden, jedoch kann die Kollinearität der Laserspursegmente bzw. die Anzahl der im Wesentlichen kollinearen Laserspursegmente noch weiter erhöht bzw. maximiert werden, indem die ermittelten Koordinaten der Laserspursegmente im 3D-Koordinatenraum nochmals dahingehend modifiziert werden, um deren Kollinearität bzw. die Anzahl der im Wesentlichen kollinearen Laserspursegmente zu erhöhen (siehe z.B. Fig. 7).

Hierbei wird bevorzugt ein Erhöhen der Kollinearität benachbarter Laserspursegmente der entsprechenden Spurlinie durch Modifizieren der dreidimensionalen Koordinaten der Laserspursegmente in im Wesentlichen radialer Richtung relativ zu der Richtung der Laserspursegmente bzw. der jeweiligen Spurlinie durchgeführt. Mit "radialer Richtung" ist hierbei eine Richtung gemeint, die sich an dem jeweiligen Koordinatenpunkt im Wesentlichen radial (d.h. im Wesentlichen senkrecht) von der Spurlinie, dem entsprechenden Laserspursegment oder einer durch die Laserspursegmente interpolierend gelegte Gerade weg- oder zu dieser hin erstreckt. Im einfachsten Falle kann dies auf Basis einer Projektion auf eine im Wesentlichen gerade Linie (z.B. eine durch mehrere oder alle Laserspursegmente einer Spurlinie interpolierend gelegte Gerade) erfolgen.

Bevorzugt wird das Modifizieren der dreidimensionalen Koordinaten der Laserspursegmente in im Wesentlichen radialer Richtung mittels Verschieben von Koordinaten von einem oder mehreren Punkten der Laserspursegmente in im Wesentlichen radialer Richtung relativ zu der Richtung der Laserspursegmente bzw. der jeweiligen Spurlinie durchgeführt, wobei im Schritt Modifizieren der Koordinaten zum Erhöhen der Kollinearität benachbarter Laserspursegmente einer Spurlinie für dreidimensionale Koordinaten der Laserspursegmente eine im Wesentlichen radiale Koordinatenverschiebung bis zu einem maximalen Koordinatenverschiebungsgrenzwert durchgeführt wird.

Bevorzugt ist der Koordinatenverschiebungsgrenzwert für eine Koordinatenverschiebung in Richtung der ersten Koordinatenachse Z größer als der Koordinatenverschiebungsgrenzwert für eine Koordinatenverschiebung in einer in der Ebene der beiden anderen Koordinatenachsen X und Y liegenden Richtung, insbesondere da hierbei ein Toleranzbereich der Fokuslage des Lasers ausgenutzt werden kann (vergleiche auch die Erläuterungen zu Fig. 8).

Bevorzugt ist eine Beabstandung von nebeneinander liegenden Spurlinien im Wesentlichen kleiner oder gleich einer Breite (Durchmesser) des Lasers auf der Werkstückoberfläche bei deren Bearbeitung, und insbesondere kleiner oder gleich der halben Breite des Lasers auf der Werkstückoberfläche bei deren Bearbeitung (bis zu kleiner oder gleich 30% des Laserdurchmessers, z.B. im Wesentlichen 20% des Laserdurchmessers, und bevorzugt größer oder gleich 10% des Laserdurchmessers), wobei der Koordinatenverschiebungsgrenzwert, insbesondere für eine Koordinatenverschiebung in einer in der Ebene der beiden anderen Koordinatenachsen (X, Y) liegenden Richtung, kleiner oder gleich 5% der Breite des Lasers auf der Werkstückoberfläche bei deren Bearbeitung ist, insbesondere kleiner oder gleich 1% der Breite des Lasers auf der Werkstückoberfläche bei deren Bearbeitung ist.

Bevorzugt ist der Koordinatenverschiebungsgrenzwert für eine Koordinaten-verschiebung in Richtung der ersten Koordinatenachse (Z) größer oder gleich 10%, insbesondere größer oder gleich 35%, der Breite des Lasers auf der Werkstückoberfläche bei deren Bearbeitung ist; und/oder der Koordinatenverschiebungsgrenzwert für eine Koordinatenverschiebung in Richtung der ersten Koordinatenachse (Z) größer oder gleich 50% der Toleranzbreite der Fokuslage des Lasers ist, insbesondere größer oder gleich 75% der Toleranzbreite der Fokuslage des Lasers. Wobei die Toleranzbreite der Fokuslage des Lasers kleiner oder gleich 1 mm, insbesondere kleiner oder gleich 500 µm oder kleiner oder gleich 100 µm ist.

Hierbei kann das Modifizieren der dreidimensionalen Koordinaten der Laserspursegmente in im Wesentlichen radialer Richtung in einer im Wesentlichen senkrecht zur Lasereinfallrichtung liegenden Ebene durchgeführt werden und/oder in im Wesentlichen parallel zur Lasereinfallrichtung durchgeführt werden.

Im Schritt S17 werden die ermittelten (und ggf. modifizierten) Koordinaten der ermittelten Laserspursegmente für den entsprechenden Abschnitt in einem entsprechenden Spursegmentdatensatz in der Erzeugung der Spursegmentdaten hinterlegt, der dann der Erzeugung der Steuerdaten (mit Erzeugung der Segmentsequenzen auf Basis der Laserspursegmente) zugrunde gelegt wird (siehe z.B. Schritt S4 oben).

Zudem können in den vorstehenden Beispielen in numerischen Berechnungen des Verfahrens beim Erzeugen der Spursegmentdaten die Koordinaten der Bild- und/oder Modelldaten, insbesondere einschließlich der der Koordinatenabbildung zugrundeliegenden zwei-und/oder dreidimensionalen Koordinaten, mit einer Ortsauflösung ausgelesen werden, die mindestens eine Auflösungsgenauigkeit von 1/1000 der Breite des Lasers auf der Werkstückoberfläche, des Abstands benachbarter Spurlinien, einer Polygongröße der Modelldaten, oder einer Pixelbreite der Bilddaten entspricht, insbesondere bevorzugt eine Genauigkeit von mindestens 1/10000; und/oder es können in numerischen Berechnungen des Verfahrens beim Erzeugen der Spursegmentdaten die Koordinaten der Bild- und/oder Modelldaten, insbesondere einschließlich der der Koordinatenabbildung zugrundeliegenden zwei-und/oder dreidimensionalen Koordinaten, mit einer Ortsauflösung ausgelesen werden, die mindestens eine Auflösungsgenauigkeit von 10 nm aufweist, insbesondere im Wesentlichen eine Auflösungsgenauigkeit von 1 nm oder von weniger als 1 nm.

In den vorstehenden Ausführungsbeispielen wurde beispielhaft angenommen, dass die parallel verlaufenden geradlinigen Spurlinien im 2D-Koordinatenraum der Bilddaten des Pixelbilds des Texturmusters angeordnet wurden und bereits bei oder mit Ermitteln der Überlappungen mit dem Texturmuster aus dem 2D-Koordinatenraum der Bilddaten auf die Oberflächenform der 3D-Modelldaten projiziert werden, bzw. bereits im 2D-Raum der Bilddaten ermittelte Spurliniensegmente entsprechend des Texturmusters projiziert werden.

Es ist auch möglich, die parallel verlaufenden geradlinigen Spurlinien in dem 3D-Koordinatenraum der Bilddaten in der vorbestimmten Ebene anzuordnen, die beispielsweise diejenige Ebene sein kann, die im Wesentlichen senkrecht zur Lasereinfallrichtung ausgerichtet sein kann (z.B. die X-Y-Ebene in Fig. 8). Dann können die gesamten Spurlinien in einer (z.B. zu der Ebene senkrecht stehenden) Richtung auf die Oberflächenform der 3D-Modelldaten projiziert werden. Ferner können dann für jede projizierte Spurlinie auf der Oberflächenform der 3D-Modelldaten zweidimensionale Oberflächenkoordinaten ausgelesen werden (z.B. UV-Koordinaten), für die dann Pixelwerte oder interpolierte Pixelwerte aus den Bilddaten bzw. dem Pixelbild ausgelesen werden können. Auf Basis der ausgelesenen Pixelwerte oder interpolierte Pixelwerte können dann auf der projizierten Spurlinie die entsprechenden Laserspursegmente bzw. Laserspursegmentkoordinaten ausgelesen werden.

Fig. 3 zeigt beispielhaft den Verlauf von Verbindungslinien einzelner Bildpunkte auf Basis von Bilddaten eines Pixelbildes ohne Subpixelinterpolation und ohne Glättung. Bespielhaft zeigt dies drei im Wesentlichen parallel zueinander verlaufende Verbindungslinien von Bildpunkten, entlang dieser der Laser im eingeschalteten Zustand verfahren werden soll. Jedoch ist bei der rechten Verbindungslinie zu erkennen, dass es am Ende zu einer Veränderung des Linienverlaufes kommt.

Grund für solche Linienverläufe kann ein vergleichsweise recht kurzer Abschnitt der Verbindungslinie sein, der aus einer leichten lateralen Abweichung eines Bildpunktes zur entsprechenden Verbindungslinie vorheriger, kollinearer Bildpunkte resultiert.

Dieser laterale Versatz allein stellt z.B. für die Qualität der Bearbeitung ein vernachlässigbar kleines Problem dar. Jedoch kann der Versatz bei der anschließenden Erzeugung von Bearbeitungssequenzen 10 dazu führen, dass die Ausgabesoftware beim Erzeugen der Steuerdaten die Richtungsänderung der Verbindungslinie als zu stark einstuft und somit den Prozess des Erzeugens einer Bearbeitungssequenz 10 mit mehreren Bearbeitungssegmenten 12 an dieser Stelle abbricht, um im Anschluss daran mit der Erzeugung einer weiteren Bearbeitungssequenz 10 zu starten.

Dies hat zur Folge, dass eine unnötig hohe Anzahl an zusätzlichen Bearbeitungssequenzen 10 erzeugt wird, die zu einer ebenso unnötigen Erhöhung der Bearbeitungszeit der Werkstückoberfläche führt.

Es ist daher vorteilhaft, wie in Fig. 4 gezeigt, wenn bereits die Bilddaten bzw. Rastergrafik der aufzubringenden Textur z.B. mittels eines Interpolationsverfahrens (z.B. Subpixelinterpolation) aufbereitet werden.

Fig. 4 illustriert beispielhaft eine Subpixel-Interpolation zur Bestimmung der Positionierung der Laserspursegmente auf Basis der Bilddaten eines Pixelbildes.

Es werden in einem ersten Schritt Spurlinien SP bzw. Schraffurlinien über die Rastergrafik bzw. das Pixelbild gelegt, anhand deren Verlaufs der Laser die Informationen aus der Rastergrafik erhalten soll. Dadurch können die auf den jeweiligen Spurlinien anzuordnenden Laserspursegmente ermittelt werden, insbesondere durch Ermitteln der Überlappungsbereiche der jeweiligen Spurlinie mit der Textur der Bilddaten bzw. mit bestimmten Pixelwertbereichen der Textur der Bilddaten, wenn Tiefeninformationen mitberücksichtigt werden sollen.

Die Spurlinie SP (wie in diesem Beispiel) verläuft z.B. quer über mehrere Pixel der Rastergrafik hinweg, die zudem entsprechend ihrer Graustufe (bzw. entsprechend des Pixelwerts) eine Tiefeninformation für das spätere Lasern beinhalten kann (siehe schraffierten Pixel).

Durch die Auflösung (Pixelbreite) der Rastergrafik (Pixelbild) können bei Koordinatenbestimmungen der Überlappungsbereiche der Spurlinie mit der in den Bilddaten angegebenen Textur Pixelfehler auftreten, bei denen Fehler der Größenordnung der Pixelbreite auftreten können. Dies hat zwar kaum Einfluss auf die Bildqualität, da dort derartige Fehler dieser Größenordnung vernachlässigbar sind, jedoch kann dies zu dem Ermitteln von sehr kurzen Laserspursegmenten führen, die zwar eine Länge der Größe der Pixelbreite nicht überschreiten, aber größere Winkelfehler hervorrufen können, die dazu führen können, dass an dieser Stelle eine spätere Segmentsequenz beendet werden muss und eine neue Segmentsequenz begonnen werden muss.

Man könnte nun eine Auflösung der Bilddaten von Grund auf genauer angeben, jedoch führt dies zu unerwünscht hohen Datenmengen, die bei großen Flächen mehrere Gigabyte erreichen können, ohne dass dies aus Gründen der Bildqualität erforderlich wäre. Stattdessen kann vorzugsweise eine Subpixelinterpolation insbesondere in lateraler Richtung quer oder senkrecht zu der jeweiligen Spurlinie durchgeführt werden.

Die Farbfüllung (in Fig, 4B als Schraffur dargestellt) des Pixels zeigt an, dass der Pixel einen definierten Tiefenwert angibt. Nun wird versucht, durch Interpolation den interpolierten Pixelwert möglichst mittig auf die Spurlinie SP bzw. Schraffurlinie zu platzieren. Dabei kann es sein, dass sich durch das Interpolationsverfahren der Tiefenwert des Pixels verändert (siehe kleineren, gepunkteten Pixel). In diesem Fall hat die Spurlinie SP bzw. Schraffurlinie nur einen sehr kleinen Teil des groben Pixels überstrichen, so dass sich aufgrund der benachbarten, teils weißen Pixel (ohne Füllung) die Graustufe zu einem helleren Farbton verändert hat und eben dadurch auch der Tiefenwert nun ein etwas anderer ist.

Dass sich neben dem Tiefenwert auch die zweidimensionale Position des Pixelwertes verändert hat, ist für das spätere Lasern der Werkstückoberfläche kein Problem. Die groben Pixel weisen in der Regel der Fälle eine deutlich geringere Fläche auf als der Laserstrahl. Zudem weist der Laserstrahl durch seine Strahlkaustik sowie der Rayleigh-Länge eine gewisse Toleranz seines Brennpunktes in der Tiefenrichtung auf, so dass geringfügige Änderungen der Tiefenwerte der Pixel sowie ein Verschieben der Position des Pixelwertes einen vernachlässigbar kleinen Einfluss auf das Ergebnis der Lasertexturierung haben.

Interpolationsverfahren z.B. in lateraler Richtung der Spurlinie SP bzw. Schraffurlinie können sich für eine solche Aufbereitung der Bilddaten eignen, wie aber auch lokal auf einen bestimmten Abschnitt der Spurlinie begrenzt wirkende Interpolationsverfahren. Auch können innerhalb eines Interpolationsverfahrens die in Betracht gezogenen Pixel (sowie höhere Auflösungen dieser) mit einer Wichtung versehen werden, so dass zum Beispiel der Pixel, der näher an der Spurlinie liegt, eine höher Wichtung bekommt als einer der anderen in Betracht gezogenen Pixel. Auch kann jedes Interpolationsverfahren mehrfach hintereinander oder abwechselnd mit anderen Interpolationsverfahren angewendet werden.

Sind die Bilddaten der Rastergrafik nun durch Subpixelinterpolation aufbereitet, können, wie in der oberen Darstellung der Fig. 5 gezeigt, die Linien der Ausschraffierung (hier am Beispiel einer Linie) über die Oberfläche des 3D-Modells gelegt werden.

Fig. 5A illustriert beispielhaft eine aus dem 2D-Raum der Bilddaten auf die Oberfläche gemäß 3D-Polygon-Modelldaten eines dreidimensionalen Werkstücks abgebildete Spurlinie SP.

Durch das Beschreiben der Oberfläche, insbesondere an Stellen mit Freiformflächen, mittels n-Polygone werden Dreiecke bzw. Vielecke erzeugt, über diese die Spurlinie gelegt wird. Hierdurch erhält die in der 2D-Darstellung gerade Linie in der Anwendung im 3D-Raum einen "eckigen" Verlauf.

Um sich diesen Sachverhalt etwas besser vorstellen zu können, ist in der Abbildung der Fig. 5A zusätzlich ein "Auge" mit einer Blickrichtung auf die Spurlinie dargestellt. Von diesem Blickwinkel aus kann man den "eckigen" Verlauf, wie beispielhaft in der unteren Abbildung der Fig. 5B gezeigt, wahrnehmen.

Die dabei auftretenden Richtungsänderungen von Polygon zu Polygon können dabei teils so groß sein, besonders bei sehr großen Polygonen aufgrund entsprechend geringer Auflösung, dass ein Abbrechen des Prozesses zur Erzeugung der Bearbeitungssequenzen 10 sehr wahrscheinlich ist.

Damit dies vermieden werden kann, kann in einem ersten Schritt die Ortsauflösung der Polygone erhöht werden. Dafür kann die Position der Polygone mittels Gleitkomma-Zahlen deutlich genauer angegeben werden als mit ganzzahligen (x,y,z)-Werten. Dabei gilt, je mehr Nach-Komma-Stellen, desto genauer die Positionsangabe eines jeden Polygons. Dies führt zu genaueren Koordinaten, bei denen Rundungsfehler vermieden werden können, so dass aufgrund von Rundungsfehlern erzeugte Winkelabweichungen vermieden werden. Dies führt zu einem präziseren Verlauf der Werkstückoberfläche, so dass die Polygonübergangsecken auftreten.

Um den Verlauf der auf die Werkstückoberfläche gemäß der Geometrieform der Modelldaten projizierte Spurlinie abzurunden, so dass in der Regel der "eckige" Verlauf der Spurlinie von Polygon zu Polygon in Bezug auf rundere Übergänge abgemildert werden kann, wird bevorzugt eine weitere Glättung des Verlaufs der Spurlinie durchgeführt. Somit wird zwar zunächst die Genauigkeit zur Vermeidung von Rundungsfehlern erhöht, dann jedoch durch Glättung der vorhanden eckigen Verläufe wieder verringert, mit der Maßgabe, dass die Spurlinie keine eckigen Kanten mehr aufweist, so dass Winkelabweichungen an und zwischen Laserspursegmenten auf der geglätteten Spurlinie vermieden werden können und die Kollinearität der Laserspursegmente erhöht werden kann.

Es kann wieder ein Interpolationsverfahren und/oder ein numerisches Glättungsverfahren angewendet werden, um den etwaigen vorhandenen "eckigen" Verlauf der Spurlinie zu glätten. Dies soll in der unteren Abbildung Fig. 5B anhand der abgerundeten gestrichelten Linie verdeutlicht sein.

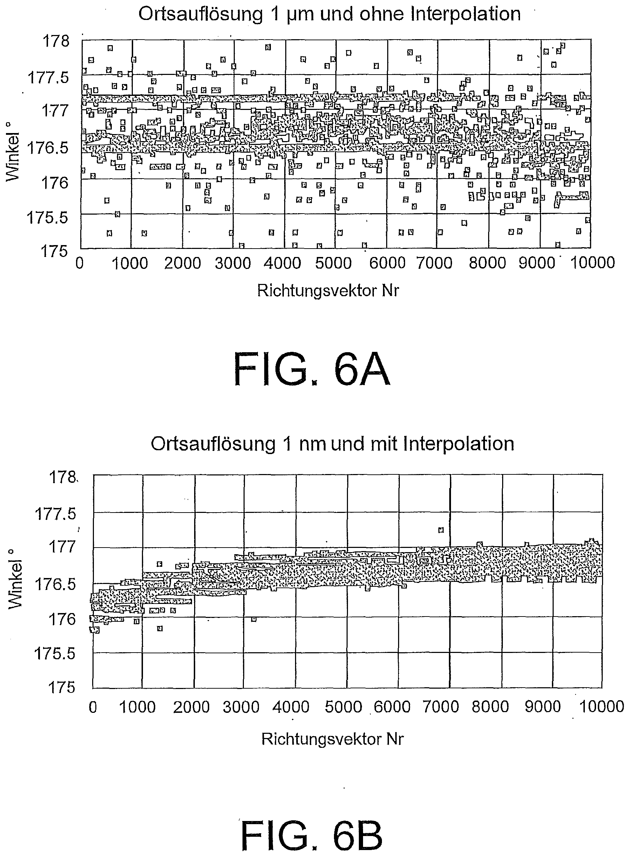

Durch das Aufbereiten der Bilddaten in der 2D-Ebene mittels Subpixelinterpolation und der Optimierung des Spurlinienverlaufs auf der Oberfläche des Werkstücks durch numerische Glättung kann bereits an dieser Stelle eine erhebliche Verbesserung der Daten für die spätere Erzeugung der Bearbeitungssequenzen erreicht werden. Dies ist anhand der Richtungsvektoren der Bearbeitungssegmente, die in einem späteren Schritt entlang der Spurlinien erzeugt werden, in Figs. 6A und 6B dargestellt.

Fig. 6A zeigt beispielhaft Winkelrichtungen von Richtungsvektoren von Laserspursegmenten mit einer geringen Ortsauflösung der Koordinaten und ohne Interpolation, und Fig. 6B zeigt beispielhaft Winkelrichtungen von Richtungsvektoren von Laserspursegmenten mit einer hohen Ortsauflösung der Koordinaten und mit Interpolation.

In der Darstellung der Fig. 6A ist gezeigt, wie bei einer vergleichsweise groben Ortsauflösung (1 µm) der Koordinaten und ohne Interpolieren die Richtungsvektoren der einzelnen Bearbeitungssegmente streuen können. Obwohl eine Konzentration der Richtungsvektoren, wie in diesem Beispiel gezeigt, im Bereich 176,5° und 177,2° zu erkennen ist, streut eine sehr große Anzahl an Richtungsvektoren im Bereich von 175° bis ca. 178°.

Dies führt dazu, dass eine Software, die versucht, fluchtende Bearbeitungssegmente 12 zu erkennen und in eine Bearbeitungssequenz 10 einzubauen, sehr früh und sehr häufig abbricht, um wieder eine neue Bearbeitungssequenz 10 zu generieren. Dadurch erhält man sehr viele kleine Bearbeitungssequenzen 10 mit entsprechend häufigen Start- und Endsegmenten 11, 13. Dies ist für ein effektives Bearbeiten einer Werkstückoberfläche ungenügend.

Hingegen ist in der Darstellung der Fig. 6B zu erkennen, wie die Richtungsvektoren nur noch im Bereich von 176,5° bis 177° variieren, so dass die Streuung der Richtungsvektoren deutlich reduziert werden konnte. Dies wurde (wie in diesem Beispiel angewendet) durch eine Ortsauflösung von 1 nm und einem Interpolationsverfahren erreicht.

Die Software, die wieder versucht, fluchtende (im Wesentlichen kollineare) Bearbeitungssegmente 12 (Laserspursegmente) zu erkennen und in eine Bearbeitungssequenz 10 (Segmentsequenz) einzubauen, bricht nun später ab und generiert daher weniger Bearbeitungssequenzen 10 mit einer durchschnittlich höheren Anzahl an Bearbeitungssegmenten 12. Dadurch wird auch die Anzahl der Start- und Endsegmente 11, 13 (Anfangs- und Endüberfahrtsegmente) verringert und insgesamt die Bearbeitungszeit der Werkstückoberfläche deutlich reduziert.

Nachdem die Laserspursegmente durch Projizieren der mit dem Texturmuster der Bilddaten überlappenden Bereiche der Spurlinien auf die von den Modelldaten angegebene Oberflächengeometrie des Abschnitts des Werkstücks ermittelt wurden, ggf. unter Durchführen einer Subpixelinterpolation der Pixelwerte des Pixelbildes und/oder einer Glättung des projizierten Spurlinienverlaufs, können die Koordinaten der Laserspursegmente als Spursegmentdaten ausgegeben werden.

Weiterhin kann auch an dieser Stelle die Kollinearität der Spursegmente bzw. die Anzahl der kollinearen Spursegmente erhöht werden, indem die bereits ermittelten Koordinaten analysiert und modifiziert werden. Eine laterale Verschiebung der Bildpunkte (insbesondere Anfangs- und Endpunkte) der Laserspursegmente ist bei Einhaltung gewisser Grenzwerte möglich, ohne die Bildqualität negativ zu beeinflussen.

Fig. 7 illustriert beispielhaft eine Koordinatenmodifikation von Koordinaten von Laserspursegmenten zur Erhöhung der Kollinearität der Laserspursegmente der Spursegmentdaten.

Die beispielhafte Reihe a) von Laserspursegmenten 12 in Fig. 7 weist beispielhaft übertriebene Winkelabweichungen auf. Die Koordinaten der Laserspursegmente 12 (insbesondere die Anfangs- und Endpunkte) können in radialer Richtung (d.h. quer bzw. senkrecht zu dem jeweiligen Laserspursegment bzw. einer durch die Laserspursegmente interpolierten Kurve bzw. der Spurlinie) modifiziert werden, um die Kollinearität der Laserspursegmente zu erhöhen, wie es beispielhaft in der Reihe b) von Laserspursegmenten 12 in Fig. 7 gezeigt ist.

Weitere Effekte, die genutzt werden können, um möglichst lange Bearbeitungssequenzen 10 zu erzeugen, sind die bereits oben angesprochenen Eigenschaften des Laserstrahls bezüglich der Toleranzen seiner Brennpunktlage.

Fig. 8 zeigt Verläufe einer projizierten Spurlinie nach Projektion, nach Glättung der Ecken und nach Glättung der Kurve der Spurlinie in Richtung der Lasereinfallsrichtung Z. In Fig. 8 ist ein Verlauf einer Spurlinie in Bezug auf die Lasereinfallsrichtung (Z-Richtung) dargestellt.

Zu Beginn ist der Verlauf der Spurlinie SP noch recht "eckig" (siehe obere Darstellung), was aber durch Interpolations- bzw. Glättungsverfahren, wie bereits weiter oben beschrieben, geglättet werden kann (siehe dazu mittlere Darstellung).

Betrachtet man nun den Toleranzbereich der Brennpunktlage des Lasers bezüglich der senkrecht zum Lasereinfall liegenden Ebene (hier die x,y-Ebene), so ist zu erkennen, dass für den Verlauf der Spurlinie SP noch reichlich "Spielraum" zur Verfügung steht, innerhalb dessen die Spurlinie SP verschoben werden kann.

Ein großer Vorteil dabei ist, dass durch die Strahlkaustik und die Rayleigh-Länge des Lasers der Prozess des Texturierens wesentlich höhere Abweichungen in Längsrichtung des Laserstrahls tolerieren kann, als dies in lateraler Richtung zum Laserstrahl möglich ist. Hierdurch kann der Verlauf der Spurlinie SP bewusst stark verfälscht werden, um später möglichst lange Bearbeitungssequenzen 10 zu erhalten, ohne dabei die Qualität des Laserprozesses damit zu stark negativ zu beeinflussen.

Dies kann wieder durch bereits genannte Interpolationsverfahren oder mathematische Glättungsverfahren herbeigeführt werden.

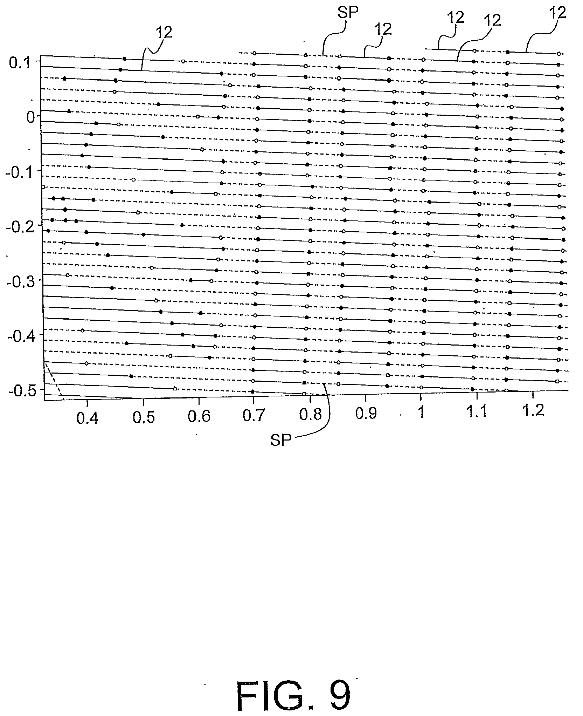

Fig. 9 zeigt beispielhaft für eine Vielzahl von parallel verlaufenden Spurlinien SP die gemäß des Texturmusters der Bilddaten ermittelten Laserspursegmente 12 aufweisen. Beispielhaft ist gezeigt, dass diese Laserspursegmente 12 der jeweiligen Spurlinien zueinander kollinear angeordnet sind, so dass die jeweiligen Laserspursegmente einer Spurlinie in einer einzigen Segmentsequenz überfahrbar sind. Somit kann die Bearbeitungszeit erheblich reduziert werden, ohne Verlust in der Qualität der Abbildung des Texturmusters. Der Abstand zwischen den parallel verlaufenden Spurlinien beträgt etwa 75 bis 95% der Breite des Lasers auf der Oberfläche, z.B. etwa 25 bis 50 µm.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele im Rahmen des Schutzumfangs der unabhängigen Ansprüche umfasst sind.

## Patentansprüche

1. Verfahren zum Erzeugen von Spursegmentdaten für ein Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine, umfassend den Schritt:
- Bereitstellen von Modelldaten, die eine dreidimensionale Geometrie einer Oberflächenform entsprechend des zumindest einen Abschnitts der Werkstückoberfläche angeben;
**gekennzeichnet durch die Schritte**
- Bereitstellen von Bilddaten, die ein Bild des auf dem zumindest einen Abschnitt der Werkstückoberfläche aufzubringenden Texturmusters angeben, und
- Erzeugen von Spursegmentdaten auf Grundlage der Bilddaten und der Modelldaten,
wobei die Spursegmentdaten für eine Mehrzahl von an dem Abschnitt der Werkstückoberfläche verlaufenden Spurlinien in Abhängigkeit des Texturmusters jeweils eine Mehrzahl von entlang der jeweiligen Spurlinie hintereinander verlaufenden Laserspursegmenten angeben, und
wobei die Spursegmentdaten auf Grundlage der Bilddaten und Modelldaten mit der Maßgabe erstellt werden, dass für jede Spurlinie die Anzahl benachbarter Laserspursegmente, die im Wesentlichen kollinear relativ zueinander angeordnet sind, vergrößert wird, und insbesondere maximiert wird.

2. Verfahren zum Erzeugen von Spursegmentdaten gemäß Anspruch 1, **dadurch gekennzeichnet, dass**
der Schritt des Erzeugens von Spursegmentdaten weiterhin für jede Spurlinie (SP) umfasst:
Erhöhen der Kollinearität benachbarter Laserspursegmente (12) der entsprechenden Spurlinie (SP) durch Modifizieren der dreidimensionalen Koordinaten der Laserspursegmente (12) in im Wesentlichen radialer Richtung relativ zu der Richtung der Laserspursegmente (12) bzw. der jeweiligen Spurlinie (SP);
wobei das Modifizieren der dreidimensionalen Koordinaten der Laserspursegmente (12) in im Wesentlichen radialer Richtung in einer im Wesentlichen senkrecht zur Lasereinfallrichtung liegenden Ebene durchgeführt wird und/oder das Modifizieren der dreidimensionalen Koordinaten der Laserspursegmente (12) in im Wesentlichen radialer Richtung im Wesentlichen parallel zur Lasereinfallrichtung durchgeführt wird, und/oder
wobei das Modifizieren der dreidimensionalen Koordinaten der Laserspursegmente (12) in im Wesentlichen radialer Richtung mittels Verschieben von Koordinaten von einem oder mehreren Punkten der Laserspursegmente (12) in im Wesentlichen radialer Richtung relativ zu der Richtung der Laserspursegmente (12) bzw. der jeweiligen Spurlinie (SP) durchgeführt wird.

3. Verfahren zum Erzeugen von Spursegmentdaten gemäß Anspruch 2, **dadurch gekennzeichnet, dass**
im Schritt Erhöhen der Kollinearität benachbarter Laserspursegmente (12) einer Spurlinie (SP) für dreidimensionale Koordinaten der Laserspursegmente (12) eine im Wesentlichen radiale Koordinatenverschiebung bis zu einem maximalen Koordinatenverschiebungsgrenzwert durchgeführt wird;
wobei eine erste Koordinatenachse (Z) im dreidimensionalen Koordinatensystem der Modelldaten im Wesentlichen parallel zur Lasereinfallrichtung bei der Bearbeitung ausgerichtet ist und eine Ebene der beiden anderen Koordinatenachsen (X, Y) im dreidimensionalen Koordinatensystem der Modelldaten im Wesentlichen senkrecht zur Lasereinfallrichtung bei der Bearbeitung ausgerichtet ist, und
wobei der Koordinatenverschiebungsgrenzwert für eine Koordinatenverschiebung in Richtung der ersten Koordinatenachse (Z) größer ist, als der Koordinatenverschiebungsgrenzwert für eine Koordinatenverschiebung in einer in der Ebene der beiden anderen Koordinatenachsen (X, Y) liegenden Richtung.

4. Verfahren zum Erzeugen von Spursegmentdaten gemäß Anspruch 3, **dadurch gekennzeichnet, dass**
eine Beabstandung von nebeneinander liegenden Spurlinien (SP) im Wesentlichen kleiner oder gleich einer Breite des Lasers auf der Werkstückoberfläche bei deren Bearbeitung ist, und insbesondere kleiner oder gleich der halben Breite des Lasers auf der Werkstückoberfläche bei deren Bearbeitung ist,
wobei der Koordinatenverschiebungsgrenzwert, insbesondere für eine Koordinatenverschiebung in einer in der Ebene der beiden anderen Koordinatenachsen (X, Y) liegenden Richtung, kleiner oder gleich 5% der Breite des Lasers auf der Werkstückoberfläche bei deren Bearbeitung ist, insbesondere kleiner oder gleich 1% der Breite des Lasers auf der Werkstückoberfläche bei deren Bearbeitung ist; und/oder
wobei der Koordinatenverschiebungsgrenzwert für eine Koordinatenverschiebung in Richtung der ersten Koordinatenachse (Z) größer oder gleich 10%, insbesondere größer oder gleich 35%, der Breite des Lasers auf der Werkstückoberfläche bei deren Bearbeitung ist; und/oder der Koordinatenverschiebungsgrenzwert für eine Koordinatenverschiebung in Richtung der ersten Koordinatenachse (Z) größer oder gleich 50% der Toleranzbreite der Fokuslage des Lasers ist, insbesondere größer oder gleich 75% der Toleranzbreite der Fokuslage des Lasers.

5. Verfahren zum Erzeugen von Spursegmentdaten gemäß einem der vorstehenden Ansprüche, **dadurch gekennzeichnet, dass**
die Modelldaten weiterhin eine Koordinatenabbildung von zweidimensionalen Koordinaten eines ersten Koordinatensystems der Bilddaten auf dreidimensionale Koordinaten eines zweiten Koordinatensystems auf der Oberflächenform der Modelldaten angeben oder auf zweidimensionale Koordinaten eines dritten Koordinatensystems von auf der Oberflächenform verlaufenden Oberflächenkoordinaten (U,V),
wobei das Erzeugen von Spursegmentdaten auf Grundlage der Bilddaten und der Modelldaten umfasst:
- Schraffieren eines dem zumindest einem Abschnitt der Werkstückoberfläche entsprechenden Abschnitt mit einer Mehrzahl von parallel verlaufenden Spurlinien,
- Projizieren der Spurlinien oder von Segmenten der Spurlinien auf die dreidimensionale Geometrie der Oberflächenform entsprechend des zumindest einen Abschnitts der Werkstückoberfläche, und/oder
- Ermitteln von Spurliniensegmenten, an denen die Spurlinien das Texturmuster in dem entsprechenden Abschnitt des Bilds des Texturmusters überlagern.

6. Verfahren zum Erzeugen von Spursegmentdaten gemäß Anspruch 5, **dadurch gekennzeichnet, dass**
die Mehrzahl von parallel verlaufenden Spurlinien im ersten Koordinatensystem der Bilddaten angeordnet sind und der Schritt des Ermittelns von Spurliniensegmenten, an denen die Spurlinien das Texturmuster in dem entsprechenden Abschnitt des Bilds des Texturmusters überlagern, im ersten Koordinatensystem der Bilddaten durchgeführt wird;
wobei im Schritt Projizieren der Spurlinien oder von Segmenten der Spurlinien die ermittelten Spurliniensegmente auf die dreidimensionale Geometrie der Oberflächenform entsprechend des zumindest einen Abschnitts der Werkstückoberfläche projiziert werden durch Abbilden von zweidimensionalen Koordinaten jedes ermittelten Spurliniensegments aus dem ersten Koordinatensystem der Bilddaten auf dreidimensionale Koordinaten auf der Oberflächenform der Modelldaten auf Grundlage der Koordinatenabbildung der Modelldaten, derart, dass die für jedes Spurliniensegment im ersten Koordinatensystem dreidimensionale Koordinaten eines entsprechenden Laserspursegments im zweiten Koordinatensystem ermittelt werden.

7. Verfahren zum Erzeugen von Spursegmentdaten gemäß Anspruch 5, **dadurch gekennzeichnet, dass**
die Mehrzahl von parallel verlaufenden Spurlinien im zweiten Koordinatensystem der Modelldaten in einer Spurlinienebene angeordnet sind, die insbesondere im Wesentlichen senkrecht zur Lasereinfallsrichtung ausgerichtet ist, und
im Schritt Projizieren der Spurlinien oder von Segmenten der Spurlinien die Spurlinien im zweiten Koordinatensystem der Modelldaten aus der Spurlinienebene auf die dreidimensionale Geometrie der Oberflächenform entsprechend des zumindest einen Abschnitts der Werkstückoberfläche projiziert werden, insbesondere im Wesentlichen in Projektionsrichtung senkrecht zu der Spurlinienebene;
wobei im Schritt Ermitteln von Spurliniensegmenten, an denen die Spurlinien das Texturmuster in dem entsprechenden Abschnitt des Bilds des Texturmusters überlagern, mittels der Koordinatenabbildung für Koordinaten der projizierten Spurlinie Bildwerte, insbesondere Pixelwerte, der das Texturmuster angebenden Bilddaten an entsprechenden Koordinaten im Koordinatenraum der Bilddaten ermittelt werden, und die Spurliniensegmente auf Basis der ermittelten Bildwerte im Koordinatenraum der Modelldaten ermittelt werden.

8. Verfahren zum Erzeugen von Spursegmentdaten gemäß einem der Ansprüche 5 bis 7, **dadurch gekennzeichnet, dass**
die Bilddaten ein Pixelbild des Texturmusters angeben, mit einer Pixelbreite, die größer oder gleich als 10% der Breite des Lasers auf der Werkstückoberfläche bei deren Bearbeitung ist, insbesondere größer oder gleich als 25% der Breite des Lasers auf der Werkstückoberfläche bei deren Bearbeitung ist;
wobei bei dem Ermitteln von Spurliniensegmenten, an denen die Spurlinien das Texturmuster in dem entsprechenden Abschnitt des Pixelbilds des Texturmusters überlagern, oder bei dem Ermitteln von Bild- bzw. Pixelwerten eine Subpixel-Interpolation durchgeführt wird; und
wobei bei der Subpixel-Interpolation eine Koordinateninterpolation in einer quer oder senkrecht relativ zu der Richtung der entsprechenden Spurlinie liegenden lateralen Richtung durchgeführt wird.

9. Verfahren zum Erzeugen von Spursegmentdaten gemäß einem der vorstehenden Ansprüche, **dadurch gekennzeichnet, dass**
die in den Modelldaten angegebene dreidimensionale Geometrie eine Mehrzahl von Polygonflächen aufweist, und insbesondere führt eine beim Erzeugen von Spursegmentdaten durchgeführte Projektion einer geraden Spurlinie auf die in den Modelldaten angegebene dreidimensionale Geometrie aufgrund eines oder mehrerer Übergänge zwischen zueinander geneigten, benachbarten Polygonflächen zu einer Abbildung der geraden Spurlinie auf eine Ecken aufweisende Spurlinie;
wobei für eine beim Erzeugen von Spursegmentdaten mittels Projektion einer geraden Spurlinie auf die in den Modelldaten angegebene dreidimensionale Geometrie ermittelte Spurlinie eine numerischen Glättung durchgeführt wird, und Koordinaten von auf der entsprechenden Spurlinie liegenden Laserspursegmenten auf Basis der numerisch geglätteten Spurlinie ermittelt werden;
wobei die numerische Glättung einen im dreidimensionalen Raum durchgeführten ersten Glättungsvorgang aufweist, bei dem Ecken der entsprechenden Spurlinie geglättet werden, derart, dass die geglättete Spurlinie an Positionen der zuvor vorhandenen Ecken abgerundete Verläufe aufweist; und
wobei die numerische Glättung einen in Lasereinfallrichtung durchgeführten zweiten Glättungsvorgang aufweist, bei dem die mittels des ersten Glättungsvorgangs geglättete Spurlinie in Richtung der parallel zur Lasereinfallrichtung ausgerichteten Richtung geglättet wird, derart, dass die weiter geglättete Spurlinie relativ zu der ungeglätteten Spurlinie flacher an einer senkrecht zur Lasereinfallrichtung ausgerichtete Ebene verläuft.

10. Verfahren zur Bearbeitung zumindest einer Werkstückoberfläche zum Aufbringen eines Texturmusters auf zumindest einem Abschnitt der Werkstückoberfläche mittels eines Lasers, insbesondere an einer numerisch gesteuerten Werkzeugmaschine, umfassend die Schritte:
- Erzeugen von Spursegmentdaten gemäß eines Verfahrens nach einem der Ansprüche 1 bis 9;
- Erzeugen von Steuerdaten auf Grundlage der erzeugten Spursegmentdaten,
wobei die Steuerdaten für jede Spurlinie eine oder mehrere Segmentsequenzen (10) angeben und jede Segmentsequenz (10) Spursegmente (11, 12, 13; 11,12,14,12,13) aufweist, entlang derer der Laser zum Aufbringen des Texturmusters auf dem zumindest einen Abschnitt der Werkstückoberfläche geführt wird, und wobei die Spursegmente einer Segmentsequenz (10) ein oder mehrere Laserspursegmente (12) umfassen, die der Laser in eingeschaltetem Zustand mit einer im Wesentlichen konstanten Bearbeitungssollgeschwindigkeit überfährt,
und wobei die Steuerdaten derart erzeugt werden, dass jede zumindest zwei Laserspursegmente (12) aufweisende Segmentsequenz (10) zwischen zwei benachbarten Laserspursegmenten (12), die im Wesentlichen kollinear zueinander ausgerichtet sind, jeweils ein Überfahrtsegment (14) aufweist, das der Laser in ausgeschaltetem Zustand mit der im Wesentlichen konstanten Bearbeitungssollgeschwindigkeit überfährt;
- Ausgeben der erzeugten Steuerdaten an eine Laservorrichtung, die den Laser zum Aufbringen des Texturmusters auf dem zumindest einen Abschnitt der Werkstückoberfläche auf Grundlage der Steuerdaten steuert.

11. Steuervorrichtung zum Einsatz an einer numerisch gesteuerten Werkzeugmaschine, die eine Laservorrichtung zur Bearbeitung zumindest einer Werkstückoberfläche zum Aufbringen eines Texturmusters auf zumindest einem Abschnitt der Werkstückoberfläche mittels eines Lasers der Laservorrichtung umfasst,
wobei die Steuervorrichtung dazu eingerichtet ist,
die Werkzeugmaschine auf Basis von Steuerdaten zu steuern, wobei die Steuerdaten eine oder mehrere Segmentsequenzen (10) für eine jede Spurlinie angeben und jede Segmentsequenz (10) Spursegmente (11, 12, 13; 11,12,14,12,13) aufweist, entlang derer der Laser zum Aufbringen des Texturmusters auf dem zumindest einen Abschnitt der Werkstückoberfläche geführt wird;
**dadurch gekennzeichnet, dass**
die Steuerungsvorrichtung dazu eingerichtet ist,
Spursegmentdaten gemäß einem Verfahren nach einem der Ansprüche 1 bis 9 zu erzeugen; und
die Steuerdaten auf Grundlage der erzeugten Spursegmentdaten zu erzeugen, wobei die Spursegmente einer Segmentsequenz (10) ein oder mehrere Laserspursegmente (12) umfassen, die der Laser in eingeschaltetem Zustand mit einer im Wesentlichen konstanten Bearbeitungssollgeschwindigkeit überfährt,
und wobei die Steuerdaten derart erzeugt werden, dass jede zumindest zwei Laserspursegmente (12) aufweisende Segmentsequenz (10) zwischen zwei benachbarten Laserspursegmenten (12), die im Wesentlichen kollinear zueinander ausgerichtet sind, jeweils ein Überfahrtsegment (14) aufweist, das der Laser in ausgeschaltetem Zustand mit der im Wesentlichen konstanten Bearbeitungssollgeschwindigkeit überfährt.

12. Werkzeugmaschine mit:
einer Steuervorrichtung gemäß Anspruch 11;
einer Laservorrichtung mit einem Laser der in drei Richtungen (X, Y, Z) von der Steuervorrichtung gesteuert über eine Werkstückoberfläche führbar ist, zum Aufbringen eines Texturmusters auf zumindest einem Abschnitt der Werkstückoberfläche mittels des Lasers der Laservorrichtung.

13. Werkzeugmaschine gemäß Anspruch 12, **dadurch gekennzeichnet, dass**
der Laser in einer Richtung im Wesentlichen senkrecht relativ zu der Richtung des Laserstrahls des Lasers mit Bearbeitungsgeschwindigkeiten von größer oder gleich 2 m/s verfahrbar ist, insbesondere größer oder gleich 4 m/s, insbesondere bevorzugt größer oder gleich 10 m/s.

14. Werkzeugmaschine gemäß Anspruch 12 oder 13, **dadurch gekennzeichnet, dass**
die Laservorrichtung zum Steuern des Lasers in einer im Wesentlichen in Richtung des Laserstrahls des Lasers ausgerichteten Richtung eine Divergenzänderungsvorrichtung aufweist.

15. Werkzeugmaschine gemäß Anspruch 14, **dadurch gekennzeichnet, dass**
der Laser in Richtung des Laserstrahls des Lasers mit einer maximalen Bearbeitungsgeschwindigkeit verfahrbar ist, die im Wesentlichen gleich oder größer ist, wie eine maximale Bearbeitungsgeschwindigkeit des Lasers in einer Richtung im Wesentlichen senkrecht relativ zu der Richtung des Laserstrahls des Lasers.

## Claims

1. A method for generating track segment data for a method for machining at least one workpiece surface in order to apply a texture pattern to at least one portion of the workpiece surface by means of a laser, in particular on a numerically controlled machine, comprising the steps of:
- providing model data that specify a three-dimensional geometry of a surface form corresponding to the at least one portion of the workpiece surface;
**characterized by the steps of:**
- providing image data that specify an image of the texture pattern to be applied to the at least one portion of the workpiece surface, and
- generating track segment data on the basis of said image data and of said model data,
wherein said track segment data respectively specify a plurality of consecutive laser track segments along the respective track line for a plurality of track lines extending on the portion of the workpiece surface, depending on said texture pattern;
wherein said track segment data are created on the basis of said image data and model data, provided that, for each track line, the number of adjacent laser track segments that are arranged so as to be substantially collinear relative to one another is increased, and in particular maximized.

2. The method for generating track segment data according to claim 1, **characterized in that**
the step of generating track segment data further comprises, for each track line (SP):
increasing the collinearity of adjacent laser track segments (12) of the corresponding track line (SP) by modifying the three-dimensional coordinates of the laser track segments (12) in a substantially radial direction relative to the direction of the laser track segments (12) or of the respective track line (SP);
wherein the modification of the three-dimensional coordinates of the laser track segments (12) is performed in a substantially radial direction in a plane lying substantially perpendicular to the laser direction of incidence and/or the modification of the three-dimensional coordinates of the laser track segments (12) is performed in a substantially radial direction substantially parallel to the laser direction of incidence, and/or
wherein the modification of the three-dimensional coordinates of the laser track segments (12) in a substantially radial direction is performed by way of shifting coordinates of one or more points of the laser track segments (12) in a substantially radial direction relative to the direction of the laser track segments (12) or of the respective track line (SP).

3. The method for generating track segment data according to claim 2, **characterized in that**
in the step of increasing the collinearity of adjacent laser track segments (12) of a track line (SP) for three-dimensional coordinates of the laser track segments (12), a substantially radial coordinate shift is performed up to a maximum coordinate shift limit value;
wherein a first coordinate axis (Z) in the three-dimensional coordinate system of the model data is oriented substantially in parallel to the laser direction of incidence during the machining, and a plane of the other two coordinate axes (X, Y) in the three-dimensional coordinate system of the model data is oriented substantially perpendicularly to the laser direction of incidence during the machining,
wherein the coordinate shift limit value for a coordinate shift in the direction of the first coordinate axis (Z) is greater than the coordinate shift limit value for a coordinate shift in a direction lying in the plane of the other two coordinate axes (X, Y).

4. The method for generating track segment data according to claim 3, **characterized in that**
a distance between adjacent track lines (SP) is substantially less than or equal to a width of the laser on the workpiece surface during machining thereof, and in particular less than or equal to half the width of the laser on the workpiece surface during machining thereof
wherein said coordinate shift limit value, in particular for a coordinate shift in a direction lying in the plane of the other two coordinate axes (X, Y), is less than or equal to 5% of the width of the laser on the workpiece surface during machining thereof, in particular less than or equal to 1% of the width of the laser on the workpiece surface during machining thereof; and/or
wherein said coordinate shift limit value for a coordinate shift in the direction of the first coordinate axis (Z) is greater than or equal to 10%, in particular greater than or equal to 35%, of the width of the laser on the workpiece surface during machining thereof; and/or the coordinate shift limit value for a coordinate shift in the direction of said first coordinate axis (Z) is greater than or equal to 50% of the tolerance width of the focal position of the laser, in particular greater than or equal to 75% of the tolerance width of the focal position of the laser.

5. The method for generating track segment data according to one of the preceding claims, **characterized in that**
said model data further specify a coordinate mapping of two-dimensional coordinates of a first coordinate system of said image data onto three-dimensional coordinates of a second coordinate system on the surface form of said model data or onto two-dimensional coordinates of a third coordinate system of surface coordinates (U, V) running on the surface form,
wherein the generation of track segment data on the basis of said image data and of said model data comprises:
- hatching a portion, corresponding to the at least one portion of the workpiece surface, with a plurality of parallel-running track lines,
- projecting the track lines or segments of the track lines onto the three-dimensional geometry of the surface form corresponding to the at least one portion of the workpiece surface, and/or
- determining track line segments at which the track lines overlap said texture pattern in the corresponding portion of the image of said texture pattern.

6. The method for generating track segment data according to claim 5, **characterized in that**
the plurality of parallel-running track lines are arranged in the first coordinate system of said image data and the step of determining track line segments at which the track lines overlap said texture pattern in the corresponding portion of the image of said texture pattern is performed in the first coordinate system of the image data;
wherein, in the step of projecting the track lines or segments of the track lines, the determined track line segments are projected onto the three-dimensional geometry of the surface form corresponding to the at least one portion of the workpiece surface by mapping two-dimensional coordinates of each determined track line segment from the first coordinate system of the image data onto three-dimensional coordinates on the surface form of the model data on the basis of the coordinate mapping of said model data, such that, for each track line segment in the first coordinate system, the three-dimensional coordinates of a corresponding laser track segment in the second coordinate system are determined.

7. The method for generating track segment data according to claim 5, **characterized in that**
the plurality of parallel-running track lines in the second coordinate system of said model data are arranged in a track line plane that is oriented substantially perpendicularly to the laser direction of incidence, and
in the step of projecting the track lines or segments of the track lines, the track lines in the second coordinate system of the model data are projected from the track line plane onto the three-dimensional geometry of the surface form corresponding to the at least one portion of the workpiece surface, in particular substantially in a projection direction perpendicular to the track line plane;
wherein, in the step of determining track line segments at which the track lines overlap the texture pattern in the corresponding portion of the image of the texture pattern, image values, in particular pixel values, of the image data specifying the texture pattern at corresponding coordinates in the coordinate space of the image data are determined by way of the coordinate mapping for coordinates of the projected track line and the track line segments are determined on the basis of the determined image values in the coordinate space of said model data.

8. The method for generating track segment data according to one of claims 5 to 7, **characterized in that**
said image data specify a pixel image of said texture pattern with a pixel width that is greater than or equal to 10% of the width of the laser on the workpiece surface during machining thereof, in particular greater than or equal to 25% of the width of the laser on the workpiece surface during machining thereof;
wherein a sub-pixel interpolation is performed during the determination of track line segments at which the track lines overlap said texture pattern in the corresponding portion of the pixel image of said texture pattern, or during the determination of image values or pixel values; and
a coordinate interpolation in a lateral direction lying transverse or perpendicular relative to the direction of the corresponding track line is performed in the sub-pixel interpolation.

9. The method for generating track segment data according to one of the preceding claims, **characterized in that**
the three-dimensional geometry specified in the model data has a plurality of polygonal surfaces, and in particular a projection of a straight track line onto the three-dimensional geometry specified in said model data performed in the generation of track segment data leads, due to one or more transitions between adjacent polygonal surfaces that are inclined to one another, to mapping of the straight track line onto a track line having corners.
wherein numerical smoothing is performed for a track line determined in the generation of track segment data by means of a projection of a straight track line onto the three-dimensional geometry specified in said model data, and coordinates of laser track segments lying on the corresponding track line are determined on the basis of the numerically smoothed track line;
wherein said numerical smoothing includes a first smoothing procedure, performed in the three-dimensional space, in which corners of the corresponding track line are smoothed such that the smoothed track line has rounded profiles at positions of the corners that were previously present; and
wherein said numerical smoothing includes a second smoothing procedure, performed in the laser direction of incidence, in which the track line smoothed by way of the first smoothing procedure is smoothed in the direction of the direction aligned parallel to the laser direction of incidence such that the track line smoothed further runs flatter relative to the unsmoothed track line on a plane oriented perpendicularly to the laser direction of incidence.

10. A method for machining at least one workpiece surface in order to apply a texture pattern to at least one portion of the workpiece surface by means of a laser, in particular on a numerically controlled machine, comprising the steps of:
- generating track segment data according to a method according to one of claims 1 to 9;
- generating control data on the basis of the generated track segment data, wherein said control data specify one or more segment sequences (10) for each track line, and each segment sequence (10) has track segments (11, 12, 13; 11, 12, 14, 12, 13) along which the laser is guided in order to apply the texture pattern to the at least one portion of the workpiece surface, and wherein the track segments of a segment sequence (10) comprise one or more laser track segments (12) which the laser travels over in the switched-on state at a substantially constant machining setpoint speed,
and wherein said control data are generated such that each segment sequence (10) having at least two laser track segments (12) between two adjacent laser track segments (12) that are oriented essentially collinearly with one another respectively has a traveled-over segment (14) which the laser travels over in the switched-off state at the substantially constant machining setpoint speed;
- outputting the generated control data to a laser device that controls the laser on the basis of said control data in order to apply said texture pattern to the at least one portion of the workpiece surface.

11. A control device for use on a numerically controlled machine tool that comprises a laser device for machining at least one workpiece surface in order to apply a texture pattern to at least one portion of the workpiece surface by means of a laser of said laser device,
wherein said control device is configured to
control said machine tool on the basis of said control data, wherein said control data specify one or more segment sequences (10) for each track line and each segment sequence (10) has track segments (11, 12, 13; 11, 12, 14, 12, 13) along which the laser is guided in order to apply said texture pattern to the at least one portion of the workpiece surface;
**characterized in that**
said control device is configured to
generate track segment data in accordance with a method according to one of claims 1 to 9; and
generate said control data on the basis of the generated track segment data;
wherein the track segments of a segment sequence (10) comprise one or more laser track segments (12) which the laser travels over in the switched-on state at a substantially constant machining setpoint speed,
and wherein said control data are generated such that each segment sequence (10) having at least two laser track segments (12) between two adjacent laser track segments (12) that are oriented essentially collinearly with one another respectively has a traveled-over segment (14) which the laser travels over in the switched-off state at the substantially constant machining setpoint speed.

12. A machine tool comprising:
a control device according to claim 11;
a laser device having a laser that is able to be guided over a workpiece surface in three directions (X, Y, Z) under control of said control device in order to apply a texture pattern to at least one portion of the workpiece surface by means of the laser of said laser device.

13. The machine tool according to claim 12, **characterized in that**
the laser is movable in a direction substantially perpendicular relative to the direction of the laser beam of the laser at machining speeds of greater than or equal to 2 m/s, in particular greater than or equal to 4 m/s, in particular preferably greater than or equal to 10 m/s.

14. The machine tool according to claim 12 or 13, **characterized in that**
said laser device includes a divergence-changing device in order to control the laser in a direction oriented substantially in the direction of the laser beam of the laser.

15. The machine tool according to claim 14, **characterized in that**
the laser is movable in the direction of the laser beam of the laser at a maximum machining speed that is substantially equal to or greater than a maximum machining speed of the laser in a direction substantially perpendicular relative to the direction of the laser beam of the laser.

## Revendications

1. Procédé destiné à produire des données de segment de piste pour un procédé d'usinage d'au moins une surface de pièce afin d'appliquer un motif de texture sur au moins une section de la surface de pièce au moyen d'un laser, en particulier au niveau d'une machine-outil commandée numériquement, comprenant l'étape de :
mise à disposition des données de modèle, qui fournissent une géométrie tridimensionnelle d'une forme de surface correspondant à la au moins une section de la surface de pièce ;
**caractérisé par** les étapes de
- mise à disposition de données d'image, qui fournissent une image du motif de texture à appliquer sur la au moins une section de la surface de pièce, et
- production de données de segment de piste sur la base des données d'image et des données de modèle,
dans lequel les données de segment de piste fournissent, pour une pluralité de lignes de piste se déroulant au niveau de la section de la surface de pièce, en fonction du motif de texture, respectivement une pluralité de segments de piste laser se déroulant les uns derrière les autres le long de la ligne de piste respective, et
dans lequel les données de segment de piste sont créées sur la base des données d'image et des données de modèle à condition que pour chaque ligne de piste le nombre de segments de piste laser avoisinants, qui sont agencés de façon essentiellement colinéaire les uns par rapport aux autres, soit accru, et en particulier maximisé.

2. Procédé destiné à produire des données de segment de piste selon la revendication 1, **caractérisé en ce que**
l'étape de production de données de segment de piste comprend en outre pour chaque ligne de piste (SP) :
l'augmentation de la colinéarité de segments de piste laser (12) avoisinants de la ligne de piste (SP) correspondante par modification des coordonnées tridimensionnelles des segments de piste laser (12) dans la direction essentiellement radiale par rapport à la direction des segments de piste laser (12) ou de la ligne de piste (SP) respective ;
dans lequel la modification des coordonnées tridimensionnelles des segments de piste laser (12) est réalisée dans la direction essentiellement radiale dans un plan se situant essentiellement à la perpendiculaire de la direction d'incidence laser et/ou la modification des coordonnées tridimensionnelles des segments de piste laser (12) est réalisée dans la direction essentiellement radiale essentiellement en parallèle de la direction d'incidence laser, et/ou
dans lequel la modification des coordonnées tridimensionnelles des segments de piste laser (12) est réalisée dans la direction essentiellement radiale par glissement de coordonnées d'un ou plusieurs points des segments de piste laser (12) dans la direction essentiellement radiale par rapport à la direction des segments de piste laser (12) ou de la ligne de piste (SP) respective.

3. Procédé destiné à produire des données de segment de piste selon la revendication 2, **caractérisé en ce que**
dans l'étape d'augmentation de la colinéarité de segments de piste laser (12) avoisinants d'une ligne de piste (SP) pour des coordonnées tridimensionnelles des segments de piste laser (12), un glissement de coordonnées essentiellement radial est réalisé jusqu'à une valeur limite de glissement de coordonnées maximale ;
dans lequel un premier axe de coordonnées (Z) dans le système de coordonnées tridimensionnel des données de modèle est orienté, lors de l'usinage, essentiellement en parallèle de la direction d'incidence laser, et un plan des deux autres axes de coordonnées (X, Y) dans le système de coordonnées tridimensionnel des données de modèle est orienté, lors de l'usinage, essentiellement à la perpendiculaire de la direction d'incidence laser, et
dans lequel la valeur limite de glissement de coordonnées pour un glissement de coordonnées dans la direction du premier axe de coordonnées (Z) est supérieure à la valeur limite de glissement de coordonnées pour un glissement de coordonnées dans une direction se situant dans le plan des deux autres axes de coordonnées (X, Y).

4. Procédé destiné à produire des données de segment de piste selon la revendication 3, **caractérisé en ce que**
un espacement de lignes de piste (SP) se situant les unes à côté des autres est essentiellement inférieur ou égal à une largeur du laser sur la surface de pièce lors de l'usinage de celle-ci, et en particulier inférieure ou égale à la demi-largeur du laser sur la surface de pièce lors de l'usinage de celle-ci,
dans lequel la valeur limite de glissement de coordonnées, en particulier pour un glissement de coordonnées dans une direction se situant dans le plan des deux autres axes de coordonnées (X, Y), est inférieure ou égale à 5 % de la largeur du laser sur la surface de pièce lors de l'usinage de celle-ci, en particulier inférieure ou égale à 1 % de la largeur du laser sur la surface de pièce lors de l'usinage de celle-ci ; et/ou
dans lequel la valeur limite de glissement de coordonnées pour un glissement de coordonnées dans la direction du premier axe de coordonnées (Z) est supérieure ou égale à 10 %, en particulier supérieure ou égale à 35 %, de la largeur du laser sur la surface de pièce lors de l'usinage de celle-ci ; et/ou la valeur limite de glissement de coordonnées pour un glissement de coordonnées dans la direction du premier axe de coordonnées (Z) est supérieure ou égale à 50 % de la largeur de tolérance de la position focale du laser, en particulier supérieure ou égale à 75 % de la largeur de tolérance de la position focale du laser.

5. Procédé destiné à produire des données de segment de piste selon l'une des revendications précédentes, **caractérisé en ce que**
les données de modèle fournissent en outre une imagerie de coordonnées de coordonnées bidimensionnelles d'un premier système de coordonnées des données d'image sur des coordonnées tridimensionnelles d'un deuxième système de coordonnées sur la forme de surface des données de modèle ou sur des coordonnées bidimensionnelles d'un troisième système de coordonnées de coordonnées de surface (U, V) se déroulant sur la forme de surface,
dans lequel la production de données de segment de piste sur la base des données d'image et des données de modèle comprend :
- le hachurage d'une section correspondant à la au moins une section de la surface de pièce avec une pluralité de lignes de piste se déroulant en parallèle,
- la projection des lignes de piste ou de segments des lignes de piste sur la géométrie tridimensionnelle de la forme de surface correspondant à la au moins une section de la surface de pièce, et/ou
- la détermination de segments de ligne de piste au niveau desquels les lignes de piste superposent le motif de texture dans la section correspondante de l'image du motif de texture.

6. Procédé destiné à produire des données de segment de piste selon la revendication 5, **caractérisé en ce que**
la pluralité de lignes de piste se déroulant en parallèle sont agencées dans le premier système de coordonnées des données d'image, et l'étape de détermination de segments de ligne de piste, au niveau desquels les lignes de piste superposent le motif de texture dans la section correspondante de l'image du motif de texture, est réalisée dans le premier système de coordonnées des données d'image ;
dans lequel dans l'étape de projection des lignes de piste ou de segments des lignes de piste, les segments de ligne de piste déterminés sont projetés sur la géométrie tridimensionnelle de la forme de surface correspondant à la au moins une section de la surface de pièce, par imagerie de coordonnées bidimensionnelles de chaque segment de ligne de piste déterminé depuis le premier système de coordonnées des données d'image sur des coordonnées tridimensionnelles sur la forme de surface des données de modèle sur la base de l'imagerie de coordonnées des données de modèle, de sorte que pour chaque segment de ligne de piste dans le premier système de coordonnées des coordonnées tridimensionnelles d'un segment de piste laser correspondant soient déterminées dans le deuxième système de coordonnées.

7. Procédé destiné à produire des données de segment de piste selon la revendication 5, **caractérisé en ce que**
la pluralité de lignes de piste se déroulant en parallèle dans le deuxième système de coordonnées des données de modèle sont agencées dans un plan de ligne de piste, qui est en particulier essentiellement orienté à la perpendiculaire de la direction d'incidence laser, et
dans l'étape de projection des lignes de piste ou de segments des lignes de piste, les lignes de piste dans le deuxième système de coordonnées des données de modèle sont projetées depuis le plan de ligne de piste sur la géométrie tridimensionnelle de la forme de surface correspondant à la au moins une section de la surface de pièce, en particulier essentiellement dans la direction de projection perpendiculaire au plan de ligne de piste ;
dans lequel dans l'étape de détermination de segments de ligne de piste, au niveau desquels les lignes de piste superposent le motif de texture dans la section correspondante de l'image du motif de texture, sont déterminées, au moyen de l'imagerie de coordonnées pour des coordonnées de la ligne de piste projetée, des valeurs d'image, en particulier des valeurs de pixel, des données d'image fournissant le motif de texture au niveau de coordonnées correspondantes dans l'espace de coordonnées des données d'image, et les segments de ligne de piste sont déterminés sur la base des valeurs d'image déterminées dans l'espace de coordonnées des données de modèle.

8. Procédé destiné à produire des données de segment de piste selon l'une des revendications 5 à 7, **caractérisé en ce que**
les données d'image fournissent une image de pixels du motif de texture, avec une largeur de pixels qui est supérieure ou égale à 10 % de la largeur du laser sur la surface de pièce lors de l'usinage de celle-ci, en particulier supérieure ou égale à 25 % de la largeur du laser sur la surface de pièce lors de l'usinage de celle-ci ;
dans lequel, lors de la détermination de segments de ligne de piste, au niveau desquels les lignes de piste superposent le motif de texture dans la section correspondante de l'image de pixels du motif de texture, ou lors de la détermination de valeurs d'image ou de pixel, est réalisée une interpolation de sous-pixels ; et
dans lequel, lors de l'interpolation de sous-pixels, une interpolation de coordonnées est réalisée dans une direction latérale se situant dans une direction transversale ou perpendiculaire par rapport à la direction de la ligne de piste correspondante.

9. Procédé destiné à produire des données de segment de piste selon l'une des revendications précédentes, **caractérisé en ce que**
la géométrie tridimensionnelle fournie dans les données de modèle présente une pluralité de surfaces polygonales, et en particulier amène une projection, réalisée lors de la production de données de segment de piste, d'une ligne de piste droite sur la géométrie tridimensionnelle fournie dans les données de modèle, en raison d'un ou plusieurs passages entre des surfaces polygonales avoisinantes, inclinées les unes vers les autres, à constituer une imagerie de la ligne de piste droite sur une ligne de piste présentant des coins ;
dans lequel, pour une ligne de piste déterminée lors de la production de données de segment de piste au moyen de la projection d'une ligne de piste droite sur la géométrie tridimensionnelle fournie dans les données de modèle, est réalisé un lissage numérique, et des coordonnées de segments de piste laser se situant sur la ligne de piste correspondante sont déterminées sur la base de la ligne de piste numériquement lissée ;
dans lequel le lissage numérique présente un premier processus de lissage réalisé dans l'espace tridimensionnel, par lequel des coins de la ligne de piste correspondante sont lissés, de sorte que la ligne de piste lissée présente en des positions des coins existant précédemment des tracés arrondis ; et
dans lequel le lissage numérique présente un second processus de lissage réalisé dans la direction d'incidence laser, par lequel la ligne de piste lissée au moyen du premier processus de lissage est lissée dans la direction orientée en parallèle de la direction d'incidence laser, de sorte que la ligne de piste qui continue à être lissée se déroule, par rapport à la ligne de piste non lissée, de façon plus plate au niveau d'un plan orienté à la perpendiculaire de la direction d'incidence laser.

10. Procédé destiné à usiner au moins une surface de pièce pour appliquer un motif de texture sur au moins une section de la surface de pièce au moyen d'un laser, en particulier au niveau d'une machine-outil commandée numériquement, comprenant les étapes de :
production de données de segment de piste selon un procédé selon l'une des revendications 1 à 9 ;
production de données de commande sur la base des données de segment de piste produites,
dans lequel les données de commande pour chaque ligne de piste fournissent une ou plusieurs séquences de segment (10) et chaque séquence de segment (10) présente des segments de piste (11, 12, 13 ; 11, 12, 14, 12, 13) le long desquels le laser est mené pour appliquer le motif de texture sur la au moins une section de la surface de pièce, et dans lequel les segments de piste d'une séquence de segment (10) comprennent un ou plusieurs segments de piste laser (12) que le laser à l'état allumé traverse à une vitesse de consigne d'usinage essentiellement constante ;
et dans lequel les données de commande sont produites de sorte que chaque séquence de segment (10) présentant au moins deux segments de piste laser (12) présente, entre deux segments de piste laser (12) avoisinants qui sont orientés de façon essentiellement colinéaire les uns par rapport aux autres, respectivement un segment de traverse (14) que le laser à l'état éteint traverse à la vitesse de consigne d'usinage essentiellement constante ;
fourniture des données de commande produites à un dispositif laser qui commande le laser, sur la base des données de commande, pour appliquer le motif de texture sur la au moins une section de la surface de pièce.

11. Dispositif de commande destiné à insérer, au niveau d'une machine-outil commandée numériquement qui comprend un dispositif laser pour usiner au moins une surface de pièce afin d'appliquer un motif de texture sur au moins une section de la surface de pièce au moyen d'un laser du dispositif laser,
dans lequel le dispositif de commande est configuré pour
commander la machine-outil sur la base de données de commande, dans lequel les données de commande fournissent une ou plusieurs séquences de segment (10) pour une chaque ligne de piste et chaque séquence de segment (10) présente des segments de piste (11, 12, 13 ; 11, 12, 14, 12, 13) le long desquels le laser est mené pour appliquer le motif de texture sur la au moins une section de la surface de pièce ;
**caractérisé en ce que**
le dispositif de commande est configuré pour
produire des données de segment de piste selon un procédé selon l'une des revendications 1 à 9 ; et
produire les données de commande sur la base des données de segment de piste produites,
dans lequel les segments de piste d'une séquence de segment (10) comprennent un ou plusieurs segments de piste laser (12) que le laser à l'état allumé traverse à une vitesse de consigne d'usinage essentiellement constante,
et dans lequel les données de commande sont produites de sorte que chaque séquence de segment (10) présentant au moins deux segments de piste laser (12) présente, entre deux segments de piste laser (12) avoisinants qui sont orientés de façon essentiellement colinéaire les uns par rapport aux autres, respectivement un segment de traverse (14) que le laser à l'état éteint traverse à la vitesse de consigne d'usinage essentiellement constante.

12. Machine-outil avec :
un dispositif de commande selon la revendication 11 ;
un dispositif laser avec un laser qui peut être mené, commandé par le dispositif de commande, dans trois directions (X, Y, Z) par-dessus une surface de pièce, pour appliquer un motif de texture sur au moins une section de la surface de pièce au moyen du laser du dispositif laser.

13. Machine-outil selon la revendication 12, **caractérisée en ce que**
le laser peut être déplacé dans une direction essentiellement perpendiculaire à la direction du rayon laser du laser avec des vitesses d'usinage supérieures ou égales à 2 m/s, en particulier supérieures ou égales à 4 m/s, en particulier de préférence supérieures ou égales à 10 m/s.

14. Machine-outil selon la revendication 12 ou 13, **caractérisée en ce que**
le dispositif laser présente un dispositif de modification de divergence pour commander le laser dans une direction orientée essentiellement dans la direction du rayon laser du laser.

15. Machine-outil selon la revendication 14, **caractérisée en ce que**
le laser peut être déplacé dans la direction du rayon laser du laser avec une vitesse d'usinage maximale qui est essentiellement supérieure ou égale à une vitesse d'usinage maximale du laser dans une direction essentiellement perpendiculaire par rapport à la direction du rayon laser du laser.
